# EUROPEAN PATENT APPLICATION

(11) **EP 4 258 189 A1**
(43) Date of publication of application: **11.10.2023**
(21) Application number: 23163676.2
(22) Date of filing: 23.03.2023
(51) Int. Cl.: G06Q 10/047, G01C 21/34

(54) **AUTONOMOUS VEHICLE FLEET SCHEDULING TO MAXIMIZE EFFICIENCY**

(30) Priority: 08.04.2022 US 202263328973 P
(71) Applicant: TuSimple, Inc., San Diego, CA 92122 (US)
(72) Inventor: TAM, Joyce, San Diego, 92122 (US); CHATURVEDI, Anand, San Diego, 92122 (US)
(74) Representative: Hamer, Thomas Daniel

(57) **Abstract**

A system comprises a fleet of autonomous vehicles and a scheduling server. The scheduling server accepts input comprising at least one preferred performance criteria to complete a mission trip. The scheduling server determines a routing plan to complete the mission trip based on the input. The routing plan is determined to optimize the at least one preferred performance criteria. The scheduling server identifies at least one autonomous vehicle that can perform the mission trip according to the determined routing plan. The scheduling server assigns the at least one autonomous vehicle to perform the mission trip.

## Description

### TECHNICAL FIELD

The present disclosure relates generally to autonomous vehicles. More particularly, the present disclosure is related to autonomous vehicle fleet scheduling to maximize efficiency.

### BACKGROUND

An autonomous vehicle may be tasked to travel from a start location to a destination. There may be several routes from the start location to the destination. The autonomous vehicle is provided with a routing plan to complete the trip from the start location to the destination. The efficiency of the operation of the autonomous vehicle and the trip depends on the routing plan.

### SUMMARY

This disclosure recognizes various problems and previously unmet needs related to determining and scheduling routing plans for one or more autonomous vehicles in a fleet of autonomous vehicles. Certain embodiments of the present disclosure provide unique technical solutions to technical problems of current autonomous vehicle technologies, including those problems described above to determine and schedule routing plans for one or more autonomous vehicles in a fleet of autonomous vehicles.

The present disclosure contemplates systems and methods for scheduling autonomous vehicle fleet routing plans to maximize efficiency, i.e., optimize performance criteria associated with the autonomous vehicle fleet operation and mission trips.

In an example scenario, a mission trip may include transporting cargo from a start location (e.g., a launch pad) to a destination (e.g., a landing pad) by an autonomous vehicle. There may be several routes from the start location to the destination, some of which may not be optimal. For example, a less optimal route may lead to excess use of fuel, traffic congestion at the start location and destination terminals, delayed departure time, delayed arrival time, limited communication with an oversight server, among other issues. The disclosed system is configured to define several performance criteria and adjust priority levels of the performance criteria based on the preference of a user. The disclosed system is further configured to determine a routing plan that leads to more optimized performance criteria. The disclosed system is further configured to consider preferred performance criteria, such as operating design domain (ODD) in determining a more optimized routing plan. The ODD may be referred to a domain or scenarios within which an autonomous vehicle is known to be able to operate, such as previously mapped routes, weather conditions, traffic conditions, etc.

Accordingly, the disclosed system may be integrated into a practical application of improving the autonomous vehicle technology by improving the operation of the fleet of autonomous vehicles tasked to execute a mission trip.

Furthermore, the disclosed system may be integrated into an additional practical application of improving the autonomous delivery operations of the fleet of autonomous vehicles. For example, the disclosed system may determine a routing plan that reduces (or otherwise prevents) traffic congestions at the start location and destination terminals without delaying the departure and arrival times. In another example, the disclosed system may determine a routing plan that enables a majority of the fleet of autonomous vehicles to have wireless communication with the oversight server more than a threshold amount of time (e.g., more than 70%, 80%, 90% of the traveling time during the mission trip). In another example, the disclosed system may determine a routing plan that allows for accuracy in determining the locations of the fleet of autonomous vehicles more than a threshold amount of time (e.g., more than 70%, 80%, 90% of the traveling time during the mission trip). In another example, the disclosed system may determine a routing plan where less-safe areas (e.g., areas with road cracks, areas with rough roads, areas with extreme weather conditions, and areas with traffic) are minimized or otherwise avoided. Thus, the discloses system may be integrated into an additional practical application of improving the driving experience of the autonomous vehicles and other vehicles traveling along the same road as the autonomous vehicles.

In one embodiment, a system comprises a fleet of autonomous vehicles and a scheduling server. The scheduling server is communicatively coupled with the fleet of autonomous vehicles. The scheduling server comprises a first processor. The first processor displays a user interface, where the user interface is configured to accept an input comprising at least one preferred performance criteria to complete a mission trip. The first processor determines, based at least in part upon the input, a routing plan to complete the mission trip, where the routing plan is determined to optimize the at least one preferred performance criteria. The first processor identifies at least one autonomous vehicle from among the fleet that can complete the mission trip according to the determined routing plan. The first processor assigns the at least one autonomous vehicle to perform the mission trip according to the determined routing plan. The at least one autonomous vehicle comprises a control device. The control device comprises a second processor. The second processor receives the determined routing plan. The second processor instructs a respective autonomous vehicle from among the at least one autonomous vehicle to travel along a road according to the determined routing plan.

Certain embodiments of this disclosure may include some, all, or none of these advantages. These advantages and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates an embodiment of a system to determine a routing plan for an autonomous vehicle to improve performance criteria associated with the autonomous vehicle and a mission trip;
FIGS. 2 illustrate an example operational flow of the system of FIG. 1 to determine a routing plan for an autonomous vehicle to improve performance criteria associated with the autonomous vehicle and a mission trip;
FIG. 3 illustrates an embodiment of a method for determining a routing plan for an autonomous vehicle to improve performance criteria associated with the autonomous vehicle and a mission trip;
FIG. 4 illustrates a block diagram of an example autonomous vehicle configured to implement autonomous driving operations;
FIG. 5 illustrates an example system for providing autonomous driving operations used by the autonomous vehicle of FIG. 4; and
FIG. 6 illustrates a block diagram of an in-vehicle control computer included in the autonomous vehicle of FIG. 4.

### DETAILED DESCRIPTION

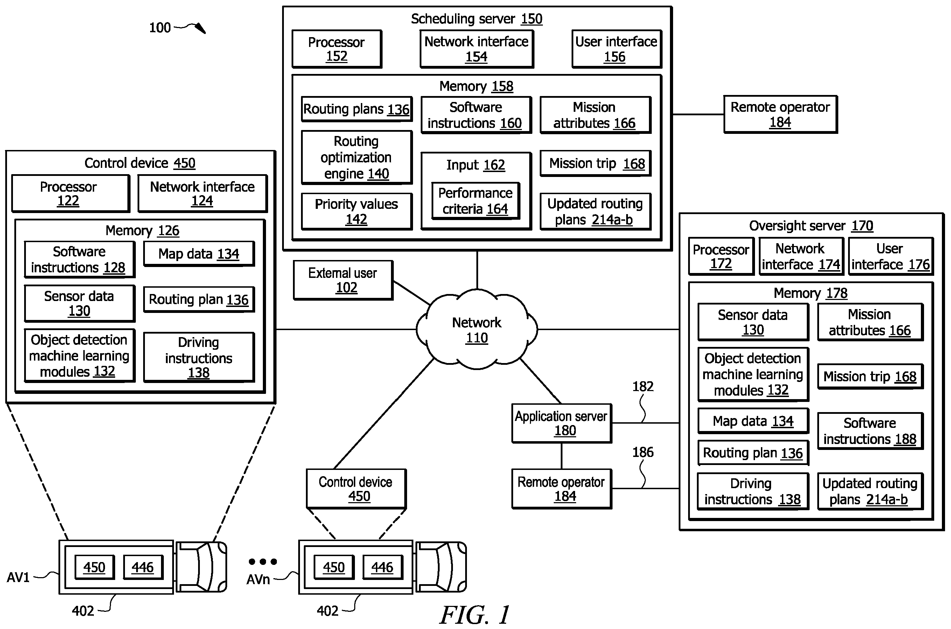

As described above, previous technologies fail to provide efficient, reliable, and safe solutions to determine a routing plan for an autonomous vehicle to improve performance criteria associated with the autonomous vehicle and a mission trip. The present disclosure provides various systems, methods, and devices to determine a routing plan for an autonomous vehicle to improve performance criteria associated with the autonomous vehicle and a mission trip. Embodiments of the present disclosure and its advantages may be understood by referring to FIGS. 1 through 6. FIGS. 1 through 6 are used to describe a system and method to determine a routing plan for an autonomous vehicle to improve performance criteria associated with the autonomous vehicle and a mission trip.

### System overview

FIG. 1 illustrates an embodiment of a system 100 configured to determine a routing plan 136 for an autonomous vehicle 402 to improve performance criteria 164 associated with the autonomous vehicle 402 and a mission trip 168. In certain embodiments, system 100 comprises a scheduling server 150 communicatively coupled with a fleet of autonomous vehicles 402, an oversight server 170, and an application server 180 via a network 110. Network 110 enables communications among components of the system 100. Network 110 allows the autonomous vehicle 402 to communicate with other autonomous vehicles 402, systems, servers 150 and 170, databases, devices, etc. Each autonomous vehicle 402 in the fleet comprises a control device 450. Control device 450 comprises a processor 122 in signal communication with a memory 126. Memory 126 stores software instructions 128 that when executed by the processor 122, cause the control device 450 to perform one or more operations described herein. Scheduling server 150 comprises a processor 152 in signal communication with a memory 158. Memory 158 stores software instructions 160 that when executed by the processor 152, cause the scheduling server 150 to perform one or more operations described herein. Oversight server 170 comprises a processor 172 in signal communication with a memory 178. Memory 178 stores software instructions 188 that when executed by the processor 172, cause the oversight server 170 to perform one or more operations described herein. In other embodiments, system 100 may not have all of the components listed and/or may have other elements instead of, or in addition to, those listed above. System 100 may be configured as shown or in any other configuration.

In an example scenario, a mission trip 168 may include transporting cargo from a start location (e.g., a launch pad) to a destination (e.g., a landing pad) by an autonomous vehicle 402. There may be several routes from the start location to the destination, some of which may not be optimal. For example, a less optimal route may lead to excess use of fuel, congestion at the start location and destination terminals, delayed departure time, delayed arrival time, limited communication with an oversight server, among other drawbacks. The system 100 is configured to define several performance criteria 164 and adjust priority levels 142 of the performance criteria 164 based on the preference of a user, e.g., the remote operator 184 and/or the external user 102. The system 100 is further configured to determine a routing plan 136 that leads to more optimized performance criteria 164.

### System components

Network 110 may include any interconnecting system capable of transmitting audio, video, signals, data, messages, or any combination of the preceding. Network 110 may include all or a portion of a local area network (LAN), a wide area network (WAN), a metropolitan area network (MAN), a personal area network (PAN), a wireless PAN (WPAN), an overlay network, a software-defined network (SDN), a virtual private network (VPN), a packet data network (e.g., the Internet), a mobile telephone network (e.g., cellular networks, such as 4G or 5G), a plain old telephone (POT) network, a wireless data network (e.g., WiFi, WiGig, WiMax, etc.), a long-term evolution (LTE) network, a universal mobile telecommunications system (UMTS) network, a peer-to-peer (P2P) network, a Bluetooth network, a near-field communication (NFC) network, a Zigbee network, a Z-wave network, a WiFi network, and/or any other suitable network.

### Example autonomous vehicle

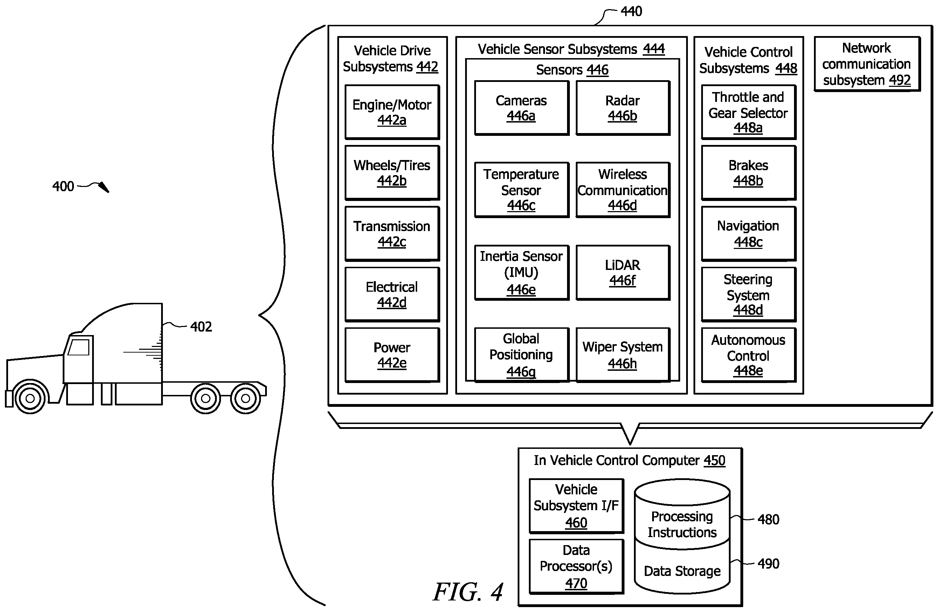

In one embodiment, the autonomous vehicle 402 may include a semi-truck tractor unit attached to a trailer to transport cargo or freight from one location to another location (see FIG. 4). The autonomous vehicle 402 is generally configured to travel along a road in an autonomous mode. The autonomous vehicle 402 may navigate using a plurality of components described in detail in FIGS. 4-6. The operation of the autonomous vehicle 402 is described in greater detail in FIGS. 4-6. The corresponding description below includes brief descriptions of certain components of the autonomous vehicle 402.

Control device 450 may be generally configured to control the operation of the autonomous vehicle 402 and its components and to facilitate autonomous driving of the autonomous vehicle 402. The control device 450 may be further configured to determine a pathway in front of the autonomous vehicle 402 that is safe to travel and free of objects or obstacles, and navigate the autonomous vehicle 402 to travel in that pathway. This process is described in more detail in FIGS. 4-6. The control device 450 may generally include one or more computing devices in signal communication with other components of the autonomous vehicle 402 (see FIG. 4). In this disclosure, the control device 450 may interchangeably be referred to as an in-vehicle control computer 450.

The control device 450 may be configured to detect objects on and around a road traveled by the autonomous vehicle 402 by analyzing the sensor data 130 and/or map data 134. For example, the control device 450 may detect objects on and around the road by implementing object detection machine learning modules 132. The object detection machine learning modules 132 may be implemented using neural networks and/or machine learning algorithms for detecting objects from images, videos, infrared images, point clouds, radar data, etc. The object detection machine learning modules 132 are described in more detail further below. The control device 450 may receive sensor data 130 from the sensors 446 positioned on the autonomous vehicle 402 to determine a safe pathway to travel. The sensor data 130 may include data captured by the sensors 446.

Sensors 446 may be configured to capture any object within their detection zones or fields of view, such as landmarks, lane markers, lane boundaries, road boundaries, vehicles, pedestrians, and road/traffic signs, among others. In some embodiments, the sensors 446 may be configured to detect rain, fog, snow, and/or any other weather condition. The sensors 446 may include a detection and ranging (LiDAR) sensor, a radar sensor, a video camera, an infrared camera, an ultrasonic sensor system, a wind gust detection system, a microphone array, a thermocouple, a humidity sensor, a barometer, an inertial measurement unit, a positioning system, an infrared sensor, a motion sensor, a rain sensor, and the like. In some embodiments, the sensors 446 may be positioned around the autonomous vehicle 402 to capture the environment surrounding the autonomous vehicle 402. See the corresponding description of FIG. 4 for further description of the sensors 446.

### Control device

The control device 450 is described in greater detail in FIG. 4. In brief, the control device 450 may include the processor 122 in signal communication with the memory 126 and a network interface 124. The processor 122 may include one or more processing units that perform various functions as described herein. The memory 126 may store any data and/or instructions used by the processor 122 to perform its functions. For example, the memory 126 may store software instructions 128 that when executed by the processor 122 causes the control device 450 to perform one or more functions described herein.

The processor 122 may be one of the data processors 470 described in FIG. 4. The processor 122 comprises one or more processors operably coupled to the memory 126. The processor 122 may be any electronic circuitry, including state machines, one or more central processing unit (CPU) chips, logic units, cores (e.g., a multi-core processor), field-programmable gate arrays (FPGAs), application-specific integrated circuits (ASICs), or digital signal processors (DSPs). The processor 122 may be a programmable logic device, a microcontroller, a microprocessor, or any suitable combination of the preceding. The processor 122 may be communicatively coupled to and in signal communication with the network interface 124 and memory 126. The one or more processors may be configured to process data and may be implemented in hardware or software. For example, the processor 122 may be 8-bit, 16-bit, 32-bit, 64-bit, or of any other suitable architecture. The processor 122 may include an arithmetic logic unit (ALU) for performing arithmetic and logic operations, processor registers that supply operands to the ALU and store the results of ALU operations, and a control unit that fetches instructions from memory and executes them by directing the coordinated operations of the ALU, registers and other components. The one or more processors may be configured to implement various instructions. For example, the one or more processors may be configured to execute software instructions 128 to implement the functions disclosed herein, such as some or all of those described with respect to FIGS. 1-6. In some embodiments, the function described herein is implemented using logic units, FPGAs, ASICs, DSPs, or any other suitable hardware or electronic circuitry.

Network interface 124 may be a component of the network communication subsystem 492 described in FIG. 4. The network interface 124 may be configured to enable wired and/or wireless communications. The network interface 124 may be configured to communicate data between the autonomous vehicle 402 and other devices, systems, or domains. For example, the network interface 124 may comprise an NFC interface, a Bluetooth interface, a Zigbee interface, a Z-wave interface, a radio-frequency identification (RFID) interface, a WIFI interface, a local area network (LAN) interface, a wide area network (WAN) interface, a metropolitan area network (MAN) interface, a personal area network (PAN) interface, a wireless PAN (WPAN) interface, a modem, a switch, and/or a router. The processor 122 may be configured to send and receive data using the network interface 124. The network interface 124 may be configured to use any suitable type of communication protocol as would be appreciated by one of ordinary skill in the art.

The memory 126 may be one of the data storages 490 described in FIG. 4. The memory 126 may be volatile or non-volatile and may comprise read-only memory (ROM), random-access memory (RAM), ternary content-addressable memory (TCAM), dynamic random-access memory (DRAM), and static random-access memory (SRAM). The memory 126 may include one or more of a local database, cloud database, network-attached storage (NAS), etc. The memory 126 may store any of the information described in FIGS. 1-6 along with any other data, instructions, logic, rules, or code operable to implement the function(s) described herein when executed by processor 122. For example, the memory 126 may store software instructions 128, sensor data 130, object detection machine learning module 132, map data 134, routing plan 136, driving instructions 138, and/or any other data/instructions. The software instructions 128 include code that when executed by the processor 122 causes the control device 450 to perform the functions described herein, such as some or all of those described in FIGS. 1-6. The memory 126 comprises one or more disks, tape drives, or solid-state drives, and may be used as an over-flow data storage device, to store programs when such programs are selected for execution, and to store instructions and data that are read during program execution.

Object detection machine learning modules 132 may be implemented by the processor 122 executing software instructions 128, and may be generally configured to detect objects and obstacles from the sensor data 130. The object detection machine learning modules 132 may be implemented using neural networks and/or machine learning algorithms for detecting objects from any data type, such as images, videos, infrared images, point clouds, Radar data, etc.

In some embodiments, the object detection machine learning modules 132 may be implemented using machine learning algorithms, such as Support Vector Machine (SVM), Naive Bayes, Logistic Regression, k-Nearest Neighbors, Decision Trees, or the like. In some embodiments, the object detection machine learning modules 132 may utilize a plurality of neural network layers, convolutional neural network layers, Long-Short-Term-Memory (LSTM) layers, Bi-directional LSTM layers, recurrent neural network layers, and/or the like, in which weights and biases of these layers are optimized in the training process of the object detection machine learning modules 132. The object detection machine learning modules 132 may be trained by a training dataset that may include samples of data types labeled with one or more objects in each sample. For example, the training dataset may include sample images of objects (e.g., vehicles, lane markings, pedestrians, road signs, obstacles, etc.) labeled with object(s) in each sample image. Similarly, the training dataset may include samples of other data types, such as videos, infrared images, point clouds, Radar data, etc. labeled with object(s) in each sample data. The object detection machine learning modules 132 may be trained, tested, and refined by the training dataset and the sensor data 130. The object detection machine learning modules 132 use the sensor data 130 (which are not labeled with objects) to increase their accuracy of predictions in detecting objects. For example, supervised and/or unsupervised machine learning algorithms may be used to validate the predictions of the object detection machine learning modules 132 in detecting objects in the sensor data 130.

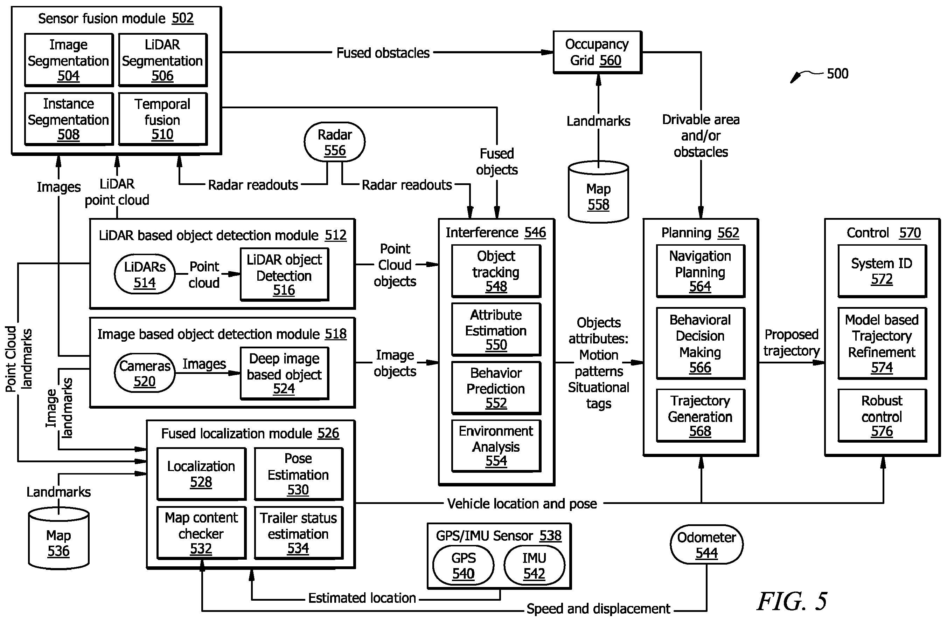

Map data 134 may include a virtual map of a city or an area that includes the road traveled by an autonomous vehicle 402. In some examples, the map data 134 may include the map 558 and map database 536 (see FIG. 5 for descriptions of the map 558 and map database 536). The map data 134 may include drivable areas, such as roads, paths, highways, and undrivable areas, such as terrain (determined by the occupancy grid module 560, see FIG. 5 for descriptions of the occupancy grid module 560). The map data 134 may specify location coordinates of road signs, lanes, lane markings, lane boundaries, road boundaries, traffic lights, obstacles, etc.

Routing plan 136 may be a plan for traveling from a start location (e.g., a first autonomous vehicle launchpad/landing pad) to a destination (e.g., a second autonomous vehicle launchpad/landing pad). For example, the routing plan 136 may specify a combination of one or more streets, roads, and highways in a specific order from the start location to the destination. The routing plan 136 may specify stages, including the first stage (e.g., moving out from a start location/launch pad), a plurality of intermediate stages (e.g., traveling along particular lanes of one or more particular street/road/highway), and the last stage (e.g., entering the destination/landing pad). The routing plan 136 may include other information about the route from the start position to the destination, such as road/traffic signs in that routing plan 136, etc.

Driving instructions 138 may be implemented by the planning module 562 (See descriptions of the planning module 562 in FIG. 5.). The driving instructions 138 may include instructions and rules to adapt the autonomous driving of the autonomous vehicle 402 according to the driving rules of each stage of the routing plan 136. For example, the driving instructions 138 may include instructions to stay within the speed range of a road traveled by the autonomous vehicle 402, adapt the speed of the autonomous vehicle 402 with respect to observed changes by the sensors 446, such as speeds of surrounding vehicles, objects within the detection zones of the sensors 446, etc.

### Scheduling server

Scheduling server 150 may include one or more processing devices and is generally configured to determine, plan, and schedule routing plans 136 to autonomous vehicles 402 for various mission trips 168. An example mission trip 168 may include transporting cargo from a start location (e.g., a launch pad) to a destination (e.g., a landing pad) by an autonomous vehicle 402.

For a given mission trip 168, the scheduling server 150 may perform pre-trip operations, such as determining a routing plan 136 to complete the mission trip 168, identifying one or more autonomous vehicles 402 to perform the mission trip 168 according to the routing plan 136 such that performance criteria 164 are optimized, and assigning the determined routing plan 136 to the autonomous vehicle 402.

The scheduling server 150 may comprise a processor 152, a network interface 154, a user interface 156, and a memory 158. The components of the scheduling server 150 are operably coupled to each other. The processor 152 may include one or more processing units that perform various functions of the scheduling server 150. The memory 158 may store any data and/or instructions used by the processor 152 to perform its functions. For example, the memory 158 may store software instructions 160 that when executed by the processor 152 cause the scheduling server 150 to perform one or more functions described herein. The scheduling server 150 may be configured as shown or in any other suitable configuration.

In one embodiment, the scheduling server 150 may be implemented by a cluster of computing devices. For example, the scheduling server 150 may be implemented by a plurality of computing devices using distributed computing and/or cloud computing systems. In another example, the scheduling server 150 may be implemented by a plurality of computing devices in one or more data centers.

In one embodiment, the scheduling server 150 may be configured to determine a particular routing plan 136 for the autonomous vehicle 402. For example, the scheduling server 150 may determine a particular routing plan 136 for an autonomous vehicle 402 that leads to optimizing one or more performance criteria 164, such as reduced driving time and achieving a safer driving experience for reaching the destination of the autonomous vehicle 402.

Processor 152 comprises one or more processors. The processor 152 is any electronic circuitry, including state machines, one or more CPU chips, logic units, cores (e.g., a multi-core processor), FPGAs, ASICs, or DSPs. The processor 152 may be a programmable logic device, a microcontroller, a microprocessor, or any suitable combination of the preceding. The processor 152 may be communicatively coupled to and in signal communication with the network interface 154, user interface 156, and memory 158. The one or more processors are configured to process data and may be implemented in hardware or software. For example, the processor 152 may be 8-bit, 16-bit, 32-bit, 64-bit or of any other suitable architecture. The processor 152 may include an ALU for performing arithmetic and logic operations, processor registers that supply operands to the ALU and store the results of ALU operations, and a control unit that fetches instructions from memory and executes them by directing the coordinated operations of the ALU, registers and other components. The one or more processors are configured to implement various instructions. For example, the one or more processors are configured to execute software instructions 160 to implement the functions disclosed herein, such as some or all of those described with respect to FIGS. 1-6. In some embodiments, the function described herein may be implemented using logic units, FPGAs, ASICs, DSPs, or any other suitable hardware or electronic circuitry.

Network interface 154 may be configured to enable wired and/or wireless communications of the scheduling server 150. The network interface 154 may be configured to communicate data between the scheduling server 150 and other devices, servers, autonomous vehicles 402, systems, or domains. For example, the network interface 154 may comprise an NFC interface, a Bluetooth interface, a Zigbee interface, a Z-wave interface, an RFID interface, a WIFI interface, a LAN interface, a WAN interface, a PAN interface, a modem, a switch, and/or a router. The processor 152 may be configured to send and receive data using the network interface 154. The network interface 154 may be configured to use any suitable type of communication protocol as would be appreciated by one of ordinary skill in the art.

User interfaces 156 may include one or more user interfaces that are configured to interact with users, such as the remote operator 184. The remote operator 184 may access the scheduling server 150 via the user interface 156. The user interfaces 156 may include peripherals of the scheduling server 150, such as monitors, keyboards, mouse, trackpads, touchpads, microphones, webcams, speakers, and the like. In certain embodiments, the user interfaces 156 may include and/or be associated with a graphical user interface, a software application, or a web application. The remote operator 184 may use the user interfaces 156 to access the memory 158 to review any data stored in the memory 158. The remote operator 184 may assign, update, revise, and/or override priority levels 142 of the performance criteria 164. The remote operator 184 may confirm, update, and/or override the routing plan 136 determined by the scheduling server 150.

Memory 158 may be volatile or non-volatile and may comprise ROM, RAM, TCAM, DRAM, and SRAM. The memory 158 may include one or more of a local database, cloud database, NAS, etc. Memory 158 may store any of the information described in FIGS. 1-6 along with any other data, instructions, logic, rules, or code operable to implement the function(s) described herein when executed by processor 152. For example, the memory 158 may store software instructions 160, input 162, performance criteria 164, one or more mission attributes 166, routing plans 136, mission trip 168, routing optimization engine 140, priority levels 142, updated routing plans 214a-b, and/or any other data/instructions. The software instructions 160 may include code that when executed by the processor 152 causes the scheduling server 150 to perform the functions described herein, such as some or all of those described in FIGS. 1-6. The memory 158 comprises one or more disks, tape drives, or solid-state drives, and may be used as an over-flow data storage device, to store programs when such programs are selected for execution, and to store instructions and data that are read during program execution.

### Example performance criteria

The corresponding description below describes various examples of performance criteria 164.

For example, the performance criteria 164 may include an on-time arrival of a majority of the fleet of autonomous vehicles 402 (e.g., more than 50%, 60%, etc. of the fleet). In this example, a more optimal routing plan 136 allows the autonomous vehicle 402 to complete the mission trip 168 on or before the scheduled arrival time. In case of traffic or road blockage, the scheduling server 150 may reroute within the autonomous freight network (AFN) to maintain the scheduled arrival time. The AFN may include pre-mapped areas and routes that the autonomous vehicle 402 can travel autonomously. For example, the AFN may include the map data 134. If a route is not available in the AFN, a driver may be dispatched to the autonomous vehicle 402 to manually drive the autonomous vehicle 402 either to a route within the AFN or to complete the mission trip 168. In some cases, a driver may be dispatched if the autonomous operations of the autonomous vehicle 402 is interrupted. A pre-trip route creation may be included in this performance criteria 164 such that it allows adding delivery stops within the routing plan 136 that can be reached on time at the destination (e.g., multi-stop routing). The on-time arrival time may be associated with an arrival window, e.g., fifteen minutes. As the size of the arrival window increase, the corresponding priority level 142 of the on-time arrival time performance parameter 164 may decrease.

In another example, the performance criteria 164 may include an on-time departure of a majority of the fleet of autonomous vehicles 402 (e.g., more than 50%, 60%, etc. of the fleet).

In another example, the performance criteria 164 may include the lowest fuel consumption by a majority of the fleet of autonomous vehicles 402 (e.g., more than 50%, 60%, etc. of the fleet). The lowest fuel consumption may result in maximizing fuel efficiency. For example, if it is determined that the maximum fuel efficiency for an autonomous vehicle 402 is achieved with the speed of 50 to 60 miles per hour (MPH), the autonomous vehicle 402 is instructed to maintain this speed whenever possible.

In another example, the performance criteria 164 may include the shortest time on the road by a majority of the fleet of autonomous vehicles 402 (e.g., more than 50%, 60%, etc. of the fleet).

In another example, the performance criteria 164 may include avoidance of areas of extreme weather. The areas of extreme weather may be identified by the scheduling server 150 based on sources including weather reports, news, the Internet, and input from the remote operator 184.

In another example, the performance criteria 164 may include avoidance of areas with road roughness more than a threshold value (e.g., more than 30%, 35%, etc.). The areas with road roughness above the threshold value may be identified by the scheduling server 150 based on sources including the map data 134 and an input from the remote operator 184.

In another example, the performance criteria 164 may include avoidance of known areas of congested traffic. The areas of congested traffic may be identified by the scheduling server 150 based on sources including traffic reports, news, the Internet, and input from the remote operator 184.

In another example, the performance criteria 164 may include avoidance of known areas of road closures. The areas of road closures may be identified by the scheduling server 150 based on sources including traffic reports, news, the Internet, and input from the remote operator 184.

In another example, the performance criteria 164 may include avoidance of toll roads. The toll roads may be identified by the scheduling server 150 based on sources including the map data 134 and an input from the remote operator 184.

In another example, the performance criteria 164 may include avoidance of routes with overpasses and/or tunnels with less than a certain threshold height (e.g., less than the height of the autonomous vehicle 402 plus a margin height, e.g., ten inches, twenty inches, etc.). The routes with overpasses and/or tunnels with less than the certain threshold height may be identified by the scheduling server 150 based on sources including the map data 134 and/or an input from the remote operator 184.

In another example, the performance criteria 164 may include avoidance of routes with uphill grades surpassing a threshold value (e.g., more than ten degrees, fifteen degrees, etc.). The routes with uphill grades surpassing the threshold value may be identified by the scheduling server 150 based on sources including the map data 134 and/or an input from the remote operator 184.

In another example, the performance criteria 164 may include avoidance of routes with downhill grades surpassing a threshold value (e.g., more than ten degrees, fifteen degrees, etc.). The routes with downhill grades surpassing the threshold value may be identified by the scheduling server 150 based on sources including the map data 134 and/or an input from the remote operator 184.

In another example, the performance criteria 164 may include a revenue per mile. The revenue per mile parameter may indicate the amount of revenue achieved per mile travelled by an autonomous vehicle 402 during the mission trip 168.

In another example, the performance criteria 164 may include a capacity or load size. In some cases, an autonomous vehicle 402 may be fully loaded with cargo. In some cases, an autonomous vehicle 402 may be less than fully loaded with cargo. In some cases, an autonomous vehicle 402 may travel empty, for example, in a case where the autonomous vehicle 402 has delivered the cargo and is on the way back to the start location. The capacity or load size parameter may indicate to maximize the load carried (or to be carried) by each autonomous vehicle 402 by making sure each autonomous vehicle 402 is carrying as much cargo as possible while each autonomous vehicle 402 is in transit. For example, in a case that the autonomous vehicle 402 has delivered the cargo at the destination, a new route stop (e.g., on the way back to the start location) may be added for the autonomous vehicle 402 where the autonomous vehicle 402 can carry another cargo for the same or another external user 102.

In another example, the performance criteria 164 may include an optimal route length, where the optimal route light parameter may indicate to find the shortest (e.g., the most efficient) traveling path that reaches all destinations of an autonomous vehicle 402.

In another example, the performance criteria 164 may include a maximized vehicle utilization. The maximize vehicle utilization parameter may indicate to maximize the utilization of the autonomous vehicles 402, e.g., by finding additional mission trips 168 when the autonomous vehicle 402 is idle without a mission trip 168. Alternatively, the utilization of the autonomous vehicles 402 may be maximized by the autonomous vehicles 402 carrying freight for internal operations (e.g., crates, boxes, etc.) in a launch pad and/or conducting test trips.

In another example, the performance criteria 164 may include a maximized autonomous operation, where the maximize autonomous operation parameter may indicate to prioritize autonomous vehicles 402 over non-autonomous operations even if the routing plan 136 is longer than a threshold distance, e.g., longer that two hundred miles, three hundred miles, etc.

In another example, the performance criteria 164 may include maximized data from test runs, where the maximize data from test runs parameter may indicate to allow tradeoff in delivery times, fuel efficiency, and/or vehicle health efficiency to gather data (e.g., sensor data 130) in unfamiliar areas of traveling, weather conditions, and other edge cases. The gathered sensor data 130 may be used to further expand the familiar traveling areas for the autonomous vehicles 402.

In another example, the performance criteria 164 may include minimizing wear and tear, where the minimizing wear and tear parameter may indicate minimizing (or disregarding) routes where there are rough weather conditions and include rough terrain.

In another example, the performance criteria 164 may include a maximized driver efficiency. The maximize driver efficiency parameter may indicate to leverage non-autonomous driving by a driver even mid-trip, e.g., by finding the closest driver to manually driving the autonomous vehicle 402 in a case of a breakdown of the autonomous vehicle 402 and not being able to autonomously operate to complete the mission trip. In a case where the driver needs transport to reach the autonomous vehicle 402 (e.g., by a taxi or flying out using an airplane), a cost-benefit analysis can decide whether it is worth immediately sending out a driver.

In another example, the performance criteria 164 may include a minimized downtime parameter. The minimize downtime parameter may indicate minimizing the downtime of an autonomous vehicle 402 mid-trip. For example, in case of a breakdown of the autonomous vehicle 402 mid-trip, the autonomous vehicle 402 may be stopped on the road or pulled over. In this case, the autonomous vehicle 402 may not be able to complete the mission trip 168 autonomously. Thus, the downtime of the autonomous vehicle 402 may be minimized by sending out a driver to manually drive the autonomous vehicle 402 to complete the mission trip 168. In another example, in case of the health of the autonomous vehicle 402 being less than a threshold value due to, e.g., lack of fuel, the autonomous vehicle 402 may be stopped on the road or pulled over. In this case, the autonomous vehicle 402 may still be able to complete the mission trip 168 autonomously if it receives proper service, e.g., fuel. Thus, the downtime of the autonomous vehicle 402 may be minimized by sending out a driver to manually drive the autonomous vehicle 402 to reach a road that the autonomous vehicle 402 can safely resume its autonomous operation to complete the mission trip 168.

In another example, the performance criteria 164 may include a minimize terminal congestion parameter. The minimize terminal congestion parameter may indicate adjusting the departure time and the arrival time to ensure that there are no delays due to terminal congestions at the launchpad and landing pad, respectively. For example, assuming that the crowded hours at the landing pad may be known to be a particular time window (e.g., 7-8 pm), the arrival time may be adjusted to avoid the particular time window and delay in the arrival time at the landing pad.

In another example, the performance criteria 164 may include a maximize third party leverage parameter. The maximize third party leverage parameter may indicate to maximize the third party autonomous vehicles 402 for completing the mission trip 168. The organization associated with the autonomous vehicles 402 may have access to use autonomous vehicles associated with a third party organization. If the third party autonomous vehicles are in an on-demand model (such that they can be requested for a mission trip on demand), a cost-effective analysis may be performed and mission trips that are higher in cost for the organization associated with the autonomous vehicles 402 may be reassigned to the third party autonomous vehicles.

In another example, the performance criteria 164 may include a maximized safety score. The maximize safety score parameter may indicate to use autonomous vehicles 402 with the least technical issues and the highest health levels.

In another example, the performance criteria 164 may include operating design domain (ODD) in determining a more optimized routing plan 136. The ODD may be referred to a domain or scenarios within which an autonomous vehicle 402 is known to be able to operate, such as previously mapped routes, weather conditions, traffic conditions, etc.

In another example, the performance criteria 164 may include types of scheduling for autonomous vehicles 402 for a mission trip 168, where the types of scheduling include a bus/train schedule and a situational schedule. These types of scheduling are described below.

The bus/train schedule may be static scheduling. In this type of scheduling, dedicated routing plans 136 where the mission attributes 166 remain relatively similar, the scheduling and optimization of the routing plan 136 are more straightforward. In these cases, the performance criteria 164 may be focused on on-time delivery, departure time constraints including terminal congestion, and increasing efficiency if possible through fuel-saving, speed, etc. In case more capacity is required for such mission trips 168, more autonomous vehicles 402 may be added to the mission trip 168 (and vice versa). Thus, the autonomous freight network (AFN) may serve as a network of smaller networks of autonomous vehicles 402 for various mission trips 168.

The situational schedule may be dynamic scheduling. For more dynamic operations where the mission trips 168 vary based on the goal (e.g., less than truckload (LTL) model, full truckload (FTL) model, etc.) a variety of optimization techniques may need to be used and more performance criteria 164 are factored in to deal with the added complexity of the mission trips 168 and their goals. In such cases, a driver and equipment balance may become more important performance criteria 164 as well as leveraging third party autonomous vehicles. These schedules may need to be dynamic based on the external user 102 and unforeseen obstacles. In the LTL model, an autonomous vehicle 402 may be allowed to carry cargo for more than one external user 102. The autonomous vehicle 402 may be allowed to carry cargo for multiple external users 102 until its full capacity. In the FTL model, an autonomous vehicle 402 may be allowed to travel with less than the full capacity of the autonomous vehicle 402 to carry cargo for one external user 102.

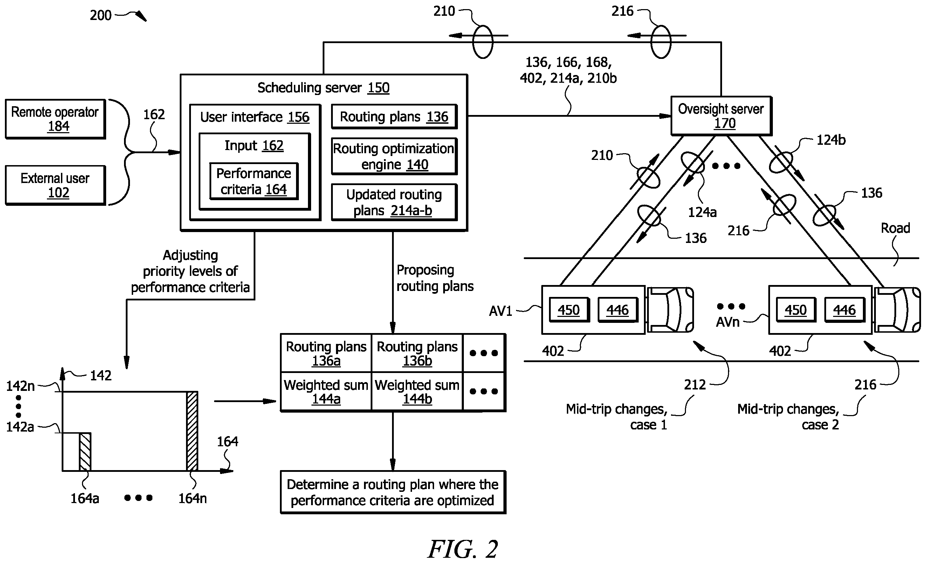

Each performance criteria 164 may be assigned a priority level 142. The priority level 142 of performance criteria 164 represents a priority of the respective performance criteria 164 over other performance criteria 164. For example, the priority levels 142 may have a scale of 0 to 10, where 0 represents the lowest priority level, and 10 represents the highest priority level. Each performance criteria 164 may be multiplied by its respective priority level 142. The scheduling server 150 (e.g., via the routing optimization engine 140) may use this information to determine a routing plan 136 for a mission trip 168 and optimize the performance criteria 164 This process is described in FIG. 2.

The routing optimization engine 140 is described further below. In brief, the routing optimization engine 140 may function as a set of levels/knobs which output a more optimal routing plan 136 based on the given constraints defined in the performance criteria 164, such as the departure time, the arrival time, etc., and provide the more optimal combination of priority levels 142 for the performance criteria 164 that provides the more optimal quantified performance criteria 164.

In certain embodiments, some performance criteria 164 may not be relevant to the external user 102, such as data gathering and utilizing third party autonomous vehicles. Thus, there may be two tier of users who can adjust the performance criteria 164 and their priority levels 142.

For example, the remote operator 184 (e.g., an internal user) may be able to adjust all performance criteria 164 and priority levels 142, whereas the external user 102 may not be given certain performance criteria 164 to adjust, e.g., where the certain performance criteria 164 may be fixed at a default level of importance and/or dedicated to be adjusted by the remote operator 184.

The internal system that includes the scheduling server 150 available to the remote operator 184 determines the routing plan 136 for a mission trip 168that may include the following features.

In certain embodiments, a subset of performance criteria 164 may be related to each other. In certain embodiments, a sub-set of performance criteria 164 may be more important than others. Thus, the user interface 156 may be configured to show which performance criteria 164 are related, and which performance criteria 164 are more important than others at a default level. Thus, a default setting can be implemented with various performance criteria 164 grouped (or bundled) under broader terms, such as maximize asset utilization group includes vehicle utilization, driver efficiency, capacity, and autonomous operation). Other advanced levers can be provided.

In some cases, the routing optimization engine 140 may provide the impact each performance indicator 164 has on the overall operation of the mission trip 168 to understand the optimization quantitatively. Thus, each performance criteria 164 may be assigned a numerical value (e.g., dollar amount) based on historical data (e.g., historical completed and uncompleted mission trips 168, historical routing plans 136 for various mission trips 168, etc.) and the importance in the current scenario of the mission trip 168. The final numerical value for routing plan 136 may reflect its optimality. Upon adjusting the priority levels 142 (e.g., levers) of the performance criteria 164 to change the importance, the numerical value may change accordingly.

In certain embodiments, the routing optimization engine 140 may provide a set of possible routing plans 136, their corresponding dollar amounts, and evaluation of the performance criteria 164.

The top choices of the routing plans 136 may be provided to a user (e.g., the remote operator 184 and/or the external user 102). For example, the external user 102 may select one of the options of routing plans 136. In another example, the remote operator 184 may select one of the options the routing plans 136.

In certain embodiments, if a new optimal routing plan 136 is discovered either pre-trip or during the mission trip 168 (e.g., by the scheduling server 150 via the routing optimization engine 140), the new optimal routing plan 136 is forwarded to the remote operator 184. The remote operator 184 is given the option to switch to the updated routing plan 136 for the mission trip 168. The switching cost may be quantified and taken into account.

Thus, for this functionality, the routing optimization engine 140 may periodically (e.g., every second, every five seconds, every minute, or any other suitable time interval) run in the background and update based on incoming data, including the sensor data 130, weather information, traffic information, traffic delays, health data of the autonomous vehicles 402 (performing the mission trip 168), and roadside assistance.

The external system that is available to the external user 102 may include the following features. In certain embodiments, performance criteria 164 that are not relevant to the external user 102, such as data gathering and utilizing third party autonomous vehicles, may not be presented to the external user 102 to adjust.

### Routing optimization engine

The routing optimization engine 140 may be implemented by the processor 152 executing the software instructions 160 and is generally configured to determine a routing plan 136 for a requested mission trip 168.

In certain embodiments, the routing optimization engine 140 may be configured to use a human input (e.g., input 162), rule-based algorithms, and machine learning algorithms, or any combination thereof to determine the routing plan 136.

In certain embodiments, the routing optimization engine 140 may use database inputs that include data gathered from sensors 446 (e.g., sensor data 130), human input for resource availability (e.g., drivers, inspectors, fleet operators, autonomous vehicle operators, etc.), weather and traffic condition data, autonomous vehicle terminals (e.g., start locations, launch pads, stop locations, and landing pads), currently active services (e.g., services being performed on autonomous vehicles 402), incoming requests from external users 102 to perform a mission trip 168, ongoing requests, completed requests, external user data, third party organization associated with third party autonomous vehicles, third party autonomous vehicles available to be used for a mission trip 168, read-time request data pulled from online boards.

In certain embodiments, the scheduling server 150 may present data to a user (e.g., the external user 102 or the remote operator 184) depending on the access level of the user (external or internal). The data may include some or all of the performance criteria 164 depending on the access level of the user, mission attributes 166, external user data. For example, the data may include relevant performance criteria 164 with sliding scales to adjust their priority levels 142. The user may view the data and suggestions from the routing optimization engine 140 for routing plans 136 to accept or deny. The user may also view real-time information about ongoing missions in case of new suggested routing plans 136.

In certain embodiments, the routing optimization engine 140 may implement a variety of algorithms to use all the available data and find mission trips 168 to accept the optimal routing plans 136. In certain embodiments, the routing optimization engine 140 may use historical mission trips 168 (completed and uncompleted), historical routing plans 136, historical assignments of autonomous vehicles 402 for each historical mission trip 168, and any other data.

In certain embodiments, the routing optimization engine 140 may implement techniques including freight optimization, pooling, aggregation, cross-docking, consolidation, and continuous travels afforded by autonomous vehicles 402.

In certain embodiments, the routing optimization engine 140 may use heuristics to weigh the performance criteria 164 (e.g., determine the priority levels 142) based on the set of level of importance through human input (e.g., the external user 102 and/or the remote operator 184).

The optimal routing plan 136 may be narrowed down to a limited number of options and presented visually on the user interface 156 along with the priority levels 142 of the performance criteria 164, data associated with the external user 102, and revenue gathered from the mission trip 168.

The remote operator 184 may choose to forward these options to the external user 102, approve or reject one or more options of routing plans 136, and suggest changes through adjusting the performance criteria 164 and/or the mission attributes 166 in the user interface 156.

In case of a mid-trip change or update of the routing plan 136 due to the routing optimization engine 140 finding a more optimal routing plan 136, the remote operator 184 is notified and can approve or reject the new routing plan 136. A comparison between the old and new options of the routing plans 136 may be shown on the user interface 156 along with differences highlighted (e.g., in a table and/or on a map). The possible added benefit of switching may be indicated on the user interface 156 while taking the switching costs into account. In case changes need to be made because of a breakdown of an autonomous vehicle 402 (e.g., the health level of the autonomous vehicle 402 being less than a threshold value, e.g., less than 70%, etc.), delays due to traffic, delays due to weather conditions, etc., the remote operator 184 is notified. In response, the routing optimization engine 140 may suggest whether the optimal next step is to have a driver complete the mission trip 168, to cancel the mission trip 168, etc. The external users 102 may be notified in case there are changes to the mission attributes 166, such as scheduled arrival time.

### Oversight server

Oversight server 170 may include one or more processing devices and is generally configured to oversee the operations of the autonomous vehicles 402 while they are in transit and oversee traveling of each autonomous vehicle 402 according to the determined routing plan 136 for each respective autonomous vehicle 402.

The oversight server 170 may comprise a processor 172, a network interface 174, a user interface 176, and a memory 178. The components of the oversight server 170 are operably coupled to each other. The processor 172 may include one or more processing units that perform various functions of the oversight server 170. The memory 178 may store any data and/or instructions used by the processor 172 to perform its functions. For example, the memory 178 may store software instructions 188 that when executed by the processor 172 causes the oversight server 170 to perform one or more functions described herein. The oversight server 170 may be configured as shown or in any other suitable configuration.

In one embodiment, the oversight server 170 may be implemented by a cluster of computing devices that may serve to oversee the operations of the autonomous vehicle 402. For example, the oversight server 170 may be implemented by a plurality of computing devices using distributed computing and/or cloud computing systems. In another example, the oversight server 170 may be implemented by a plurality of computing devices in one or more data centers. As such, in one embodiment, the oversight server 170 may include more processing power than the control device 450. The oversight server 170 is in signal communication with the autonomous vehicle 402 and its components (e.g., the control device 450) and the scheduling server 150.

Processor 172 comprises one or more processors. The processor 172 is any electronic circuitry, including state machines, one or more CPU chips, logic units, cores (e.g., a multi-core processor), FPGAs, ASICs, or DSPs. The processor 172 may be a programmable logic device, a microcontroller, a microprocessor, or any suitable combination of the preceding. The processor 172 may be communicatively coupled to and in signal communication with the network interface 174, user interface 176, and memory 178. The one or more processors are configured to process data and may be implemented in hardware or software. For example, the processor 172 may be 8-bit, 16-bit, 32-bit, 64-bit or of any other suitable architecture. The processor 172 may include an ALU for performing arithmetic and logic operations, processor registers that supply operands to the ALU and store the results of ALU operations, and a control unit that fetches instructions from memory and executes them by directing the coordinated operations of the ALU, registers and other components. The one or more processors are configured to implement various instructions. For example, the one or more processors are configured to execute software instructions 188 to implement the functions disclosed herein, such as some or all of those described with respect to FIGS. 1-6. In some embodiments, the function described herein may be implemented using logic units, FPGAs, ASICs, DSPs, or any other suitable hardware or electronic circuitry.

Network interface 174 may be configured to enable wired and/or wireless communications of the oversight server 170. The network interface 174 may be configured to communicate data between the oversight server 170 and other devices, servers, autonomous vehicles 402, systems, or domains. For example, the network interface 174 may comprise an NFC interface, a Bluetooth interface, a Zigbee interface, a Z-wave interface, an RFID interface, a WIFI interface, a LAN interface, a WAN interface, a PAN interface, a modem, a switch, and/or a router. The processor 172 may be configured to send and receive data using the network interface 174. The network interface 174 may be configured to use any suitable type of communication protocol as would be appreciated by one of ordinary skill in the art.

User interfaces 176 may include one or more user interfaces that are configured to interact with users, such as the remote operator 184. The remote operator 184 may access the oversight server 170 via the communication path 186. The user interfaces 176 may include peripherals of the oversight server 170, such as monitors, keyboards, mouse, trackpads, touchpads, microphones, webcams, speakers, and the like. The remote operator 184 may use the user interfaces 176 to access the memory 178 to review any data stored in the memory 178. The remote operator 184 may confirm, update, and/or override the routing plan 136 and/or any other data stored in memory 178.

Memory 178 may be volatile or non-volatile and may comprise ROM, RAM, TCAM, DRAM, and SRAM. The memory 178 may include one or more of a local database, cloud database, NAS, etc. Memory 178 may store any of the information described in FIGS. 1-6 along with any other data, instructions, logic, rules, or code operable to implement the function(s) described herein when executed by processor 172. For example, the memory 178 may store software instructions 188, sensor data 130, object detection machine learning module 132, map data 134, routing plan 136, driving instructions 138, mission trip 168, mission attributes 166, and/or any other data/instructions. The software instructions 188 may include code that when executed by the processor 172 causes the oversight server 170 to perform the functions described herein, such as some or all of those described in FIGS. 1-6. The memory 178 comprises one or more disks, tape drives, or solid-state drives, and may be used as an over-flow data storage device, to store programs when such programs are selected for execution, and to store instructions and data that are read during program execution.

### Application server

The application server 180 may be any computing device configured to communicate with other devices, such as the oversight server 170, autonomous vehicles 402, databases, etc., via the network 110. The application server 180 may be configured to perform functions described herein and interact with the remote operator 184, e.g., via communication path 182 using its user interfaces. Examples of the application server 180 include, but are not limited to, desktop computers, laptop computers, servers, etc. In one example, the application server 180 may act as a presentation layer from which the remote operator 184 can access the oversight server 170. As such, the oversight server 170 may send the routing plan 136, mission attributes 166, mission trip 168, and/or any other data/instructions to the application server 180, e.g., via the network 110. The remote operator 184, after establishing the communication path 182 with the application server 180, may review the received data and confirm, update, and/or override any of the received data.

The remote operator 184 may be an individual who is associated with and has access to the oversight server 170 and/or the scheduling server 150. For example, the remote operator 184 may be an administrator that can access and view the information regarding the autonomous vehicle 402, such as sensor data 130, driving instructions 138, routing plan 136, and other information that is available on the memory 158 and/or the memory 178. In one example, the remote operator 184 may access the oversight server 170 from the application server 180 that is acting as a presentation layer via the network 110. In another example, the remote operator 184 may access the scheduling server 150 via user interfaces 156.

### Operational flow for determining a routing plan for an autonomous vehicle

FIG. 2 illustrates an example operational flow 200 of system 100 described in FIG. 1 for determining a routing plan 136 for an autonomous vehicle 402 to optimize performance criteria 164 associated with the autonomous vehicle 402 and a mission trip 168. In an example scenario, assume that an external user 102, such as an individual or an organization wants to transport cargo from a particular start location to a particular destination. The external user 102 initiates a request that indicates the external user 102 wants to transport the cargo. In certain embodiments, the external user 102 may indicate one or more preferred performance criteria 164 in the request. For example, the mission trip 168 is forwarded to the external user 102. The external user 102 may indicate the importance of one or more performance criteria 164 based on their preference and indicate the priority level 142 of performance criteria 164.

In certain embodiments, the process of adjusting the priority levels 142 of the one or more performance criteria 164 may be performed internally, e.g., by the routing optimization engine 140, similar to that described in FIG. 1. The remote operator 184 may update, revise, confirm, or override the priority levels 142 of one or more performance criteria 164 determined by the routing optimization engine 140.

The operational flow 200 begins when the scheduling server 150 receives the input 162. In certain embodiments, the input 162 may be received from the remote operator 184 and/or the external user 102 who requested the mission trip 168. For example, the external user 102 may indicate a first set of performance criteria 164, and the remote operator 184 may indicate a second set of performance criteria 164.

The scheduling server 150 may display a user interface 156 that may include a graphical user interface, software application, or a web application. The user interface 156 may be configured to accept the input 162. The input 162 may include at least one preferred performance criteria 164 (indicated by the remote operator 184 and/or the external user 102) to complete the mission trip 168. Various examples of performance criteria 164 are described in FIG. 1.

In some cases, a fleet of autonomous vehicles 402 may be needed to complete the mission trip 168 depending on the volume of the load to be transported, e.g., if more than one autonomous vehicle 402 is required to transport the load. In some cases, one autonomous vehicle 402 may be needed to complete the mission trip depending on the volume of the load to be transported, e.g., if one autonomous vehicle 402 is sufficient to transport the load.

### Determining a routing plan

The scheduling server 150 determines a routing plan 136 to complete the mission trip 168 based on the received input 162. The routing plan 136 is determined to optimize the at least one preferred performance criteria 164 indicated in the input 162. In this process, the scheduling server 150 may implement the routing optimization engine 140.

The routing optimization engine 140 may adjust the priority levels 142 of the performance criteria 164, similar to that described in FIG. 1. For example, the routing optimization engine 140 may adjust the priority levels 142 of the performance criteria 164 such that a weighted sum 144 (e.g., weighted sum 144a, 144b) of the performance criteria 164 assigned with their priority levels 142 is maximized.

As can be seen in FIG. 2, an exemplary plot of performance criteria 164 assigned with priority levels 142 is illustrated. In the exemplary plot, the y-axis represents the performance criteria 164, and the x-axis represents the priority levels 142.

In the illustrated example, the performance criteria 164a to 164n are assigned with priority levels 142a to 142n, respectively. Each of the performance criteria 164a to 164n is an example of performance criteria 164 described in FIG. 1. The performance criteria 164a is assigned with the priority level 142a (e.g., 3 out of 10), and performance criteria 164n is assigned to priority level 142n (e.g., 9 out of 10). Other performance criteria 164 (not explicitly shown) may be assigned to their respective priority levels 142.

There may be several routing plans from the launch pad (e.g., the start location of the mission trip 168) to the landing pad (i.e., the destination of the mission trip 168). The routing optimization engine 140 may run a simulation for each routing plan 136 from the launch pad (e.g., the start location of the mission trip 168) to the landing pad (i.e., the destination of the mission trip 168) to perform the mission trip 168, and determine which routing plan 136 results in the maximum weighted sum 144 of the performance criteria 164 and their priority levels 142. The routing optimization engine 140 may select a particular routing plan 136 that results in the maximum weighted sum 144 of performance criteria 164 and their priority levels 142 for the mission trip 168.

In an example, assume that the routing optimization engine 140 determines a set of routing plans 136 from the launch pad to the landing pad, where the set of routing plans 136 comprises a first routing plan 136a and a second routing plan 136b. The routing optimization engine 140 may run a simulation for the first routing plan 136a, evaluate the performance criteria 164 if the first routing plan 136a is selected to perform the mission trip 168, and determine a first weighted sum 144a of the performance criteria 164 if the first routing plan 136a is selected to perform the mission trip 168. Similarly, the routing optimization engine 140 may run a simulation for the second routing plan 136b, evaluate the performance criteria 164 if the second routing plan 136b is selected to perform the mission trip 168, and determine a second weighted sum 144b of the performance criteria 164 if the second routing plan 136b is selected to perform the mission trip 168.

The routing optimization engine 140 compares the first weighted sum 144a with the second weighted sum 144b. If the routing optimization engine 140 determines that the first weighted sum 144a is more than the second weighted sum 144b, the routing optimization engine 140 selects the first routing plan 136a to complete the mission trip 168. Otherwise, the routing optimization engine 140 may select the second routing plan 136b to complete the mission trip 168.

In certain embodiments, determining the routing plan 136 for the autonomous vehicles 402 to perform the mission trip 168 may be based on a first preference for routing plans 136 that enable a majority of the fleet of autonomous vehicles 402 to have wireless communication with the oversight server 170 more than a first threshold amount of time (e.g., more than 70%, 80%, 90% of the traveling time during the mission trip 168).

In certain embodiments, determining the routing plan 136 for the autonomous vehicles 402 to perform the mission trip 168 may be based on a second preference for routing plans 136 that are included in a map database 134 (see FIG. 1). The map database 134 comprises at least a portion of a map where location coordinates and types of objects, roads, and traffic signs on the map are indicated.

In certain embodiments, determining the routing plan 136 for the autonomous vehicles 402 to perform the mission trip 168 may be based on a third preference for routing plans 136 that allow for accuracy in determining a location of the at least one autonomous vehicle 402 in the fleet more than a second threshold amount of time (e.g., more than 70%, 80%, 90% of the traveling time during the mission trip 168).

In certain embodiments, determining the routing plan 136 for the autonomous vehicles 402 to perform the mission trip 168 may be based on a safety and maintenance schedule for the at least one autonomous vehicle 402 in the fleet of autonomous vehicles 402.

In certain embodiments, the determined routing plan 136 may include a suggested main route for the at least one autonomous vehicle 402, a suggested velocity for each segment of the determined routing plan 136 for the at least one autonomous vehicle 402, and a frequency for check-in with the oversight server 170 for the at least one autonomous vehicle 402.

In certain embodiments, the routing optimization engine 140 may determine the routing plain 136 based on potential cost per mile. The routing optimization engine 140 may calculate the potential costs associated with taking various routes and select the cheapest route as one of the options to consider.

### Identifying an autonomous vehicle to complete the mission trip according to the routing plan

Upon determining the routing plan 136, the routing optimization engine 140 may identify at least one autonomous vehicle 402 to complete the mission trip 168 according to the determined routing plan 136. In a case where more than one autonomous vehicle 402 is needed to transport the load or cargo, more than one autonomous vehicle 402 is identified to complete the mission trip 168. In a case where only one autonomous vehicle 402 is needed to transport the load or cargo, one autonomous vehicle 402 is identified to complete the mission trip 168.

The routing optimization engine 140 may identify the at least one autonomous vehicle 402 that can fulfill the mission trip 168 according to the routing plan 136 and the performance criteria 164. For example, the routing optimization engine 140 may choose from autonomous vehicles 402 that are available at the start location (i.e., launch pad) of the mission trip 168 and road-worthy (e.g., passed technical and physical pre-trip inspections).

Upon identifying the at least one autonomous vehicle 402, the routing optimization engine 140 may assign the at least one autonomous vehicle 402 to perform the mission trip 168 according to the determined routing plan 136. The mission trip 168 becomes live or active when the autonomous vehicle(s) 402 is assigned to it. Otherwise, the external user 102 may be notified that the mission trip 168 cannot be performed.

### Executing the mission trip

As noted above, the scheduling server 150 performs pre-trip operations such as determining a routing plan 136, and planning and scheduling mission trips 168. Once the mission trip 168 is created, and autonomous vehicle(s) 402 are assigned to the mission trip 168, the scheduling server 150 communicates the mission trip 168, the routing plan 136, the assigned autonomous vehicle(s) 402, and the mission attributes 166 to the oversight server 170.

The mission attributes 166 may include a tracker type (see FIG. 4 for an exemplary tractor type) associated with the at least one autonomous vehicle 402, a tracker identification (ID) associated with the at least one autonomous vehicle 402, a trailer type associated with the at least one autonomous vehicle 402, a trailer ID associated with the at least one autonomous vehicle 402, a mission type associated with the mission trip 168 (e.g., transport between states, transport within a state, etc.), a departure time, a departure location (e.g., a launch pad), an estimated arrival time, an arrival window, an arrival location (e.g., a landing pad), a load type to be carried by the at least one autonomous vehicle, weight of the load, the external user 102 who requested the mission trip 168, and a vehicle configuration associated with the at least one autonomous vehicle 402.

The oversight server 170 receives the mission trip 168, the routing plan 136, the assigned autonomous vehicle(s) 402, and the mission attributes 166. In one embodiment, the oversight server 170 may communicate the routing plan 136 to the at least one autonomous vehicle 402. In another embodiment, the scheduling server 150 may communicate the routing plan 136 to the at least one autonomous vehicle 402. At this stage, the mission trip 168 is initiated - meaning that the autonomous vehicle(s) 402 start the mission trip 168.

In certain embodiments, the oversight server 170 may periodically (e.g., every second, every five seconds, every minute, or any other suitable time interval) communicate with the at least one autonomous vehicle 402 to ensure that the at least one autonomous vehicle 402 is performing the mission trip 168 according to the determined routing plan 136.

Each of the at least one autonomous vehicle 402 may include a control device 450, similar to that described in FIGS. 1 and 4. The control device 450 may be configured to receive the routing plan 136 from the oversight server 170 and/or the scheduling server 150. Upon receiving the routing plan 136, the control device 450 may instruct the autonomous vehicle 402 to travel along a road according to the determined routing plan 136.

The control device 450 of each autonomous vehicle 402 may further be configured to determine a trajectory for the respective autonomous vehicle 402. The trajectory of the respective autonomous vehicle 402 is based on one or more of traffic information supplied by the oversight server 170, weather conditions determined by the sensors 446 of the autonomous vehicle 402, perception data provided by the sensors 446 of the autonomous vehicle 402, and vehicle health data provided by the sensors 446 of the autonomous vehicle 402. The traffic information may include information about the traffic on the road traveled by the autonomous vehicle 402 and/or other roads on the routing plan 136. The weather condition may include information about the weather on the road traveled by the autonomous vehicle 402 and/or other roads on the routing plan 136. The perception data may indicate the perception and detection of objects, lane markings, traffic signs, etc. on and around the road traveled by the autonomous vehicle 402 according to the visibility of the sensors 446. The vehicle health data may include information about the health of components of the autonomous vehicle 402 (e.g., the engine, autonomous modules, etc.)

### A first case of mid-trip changes

In some cases, while the autonomous vehicle 402 (from among the at least one autonomous vehicle 402 assigned for the mission trip 168) is performing the mission trip 168 and traveling toward the destination, the control device 450 may determine that the mission trip 168 is delayed due to an unexpected event 212. The unexpected event 212 may include traffic congestion and/or extreme weather condition. In such cases, the control device 450 may notify the oversight server 170 that the mission trip 168 is delayed. The control device 450 may notify the oversight server 170 by communicating a first notification message 210 to the oversight server 170.

The oversight server 170 may receive the first notification message 210. The oversight server 170 may forward the first notification message 210 to the scheduling server 150. In certain embodiments, the control device 450 may directly communicate the first notification message 210 to the scheduling server 150.

The scheduling server 150 receives the first notification message 210. The scheduling server 150 determines a first updated routing plan 214a based on the input 162 and the first notification message 210. The scheduling server 150 communicates the first updated routing plan 214a to the oversight server 170. The oversight server 170 may communicate the first updated routing plan 214a to the autonomous vehicle 402.

### A second case of mid-trip changes

In some cases, while the autonomous vehicle 402 (from among the at least one autonomous vehicle 402 assigned for the mission trip 168) is performing the mission trip 168 and traveling toward the destination, the control device 450 may determine an unexpected event 216 that may prevent the autonomous vehicle 402 from completing the mission trip 168 either autonomously or non-autonomously with the help of a driver. For example, the unexpected event 216 may include detecting that a health level of the autonomous vehicle 402 (e.g., a health level of a component of the autonomous vehicle 402) has become less than a threshold value (e.g., less than 60%, 50%, etc.). In such cases, the control device 450 may notify the oversight server 170 that the autonomous vehicle 402 cannot complete the mission trip 168. The control device 450 may notify the oversight server 170 by communicating a second notification message 218 to the oversight server 170.

The oversight server 170 may receive the second notification message 218. The oversight server 170 may forward the second notification message 218 to the scheduling server 150. In certain embodiments, the control device 450 may directly communicate the second notification message 218 to the scheduling server 150.

The scheduling server 150 receives the second notification message 218. The scheduling server 150 determines a second updated routing plan 214b to perform the mission trip 168 based on the input 162 and the second notification message 218. The scheduling server 150 may identify another autonomous vehicle 402 that can complete the mission trip 168 according to the second updated routing plan 214b, and assign the other autonomous vehicle 402 to the mission trip 168, similar to that described above.

The scheduling server 150 may determine a new departure time, a new arrival time, and new mission attributes 166 for the other autonomous vehicle 402. The scheduling server 150 may inform the external user 102 about the new departure time and the new arrival time. In some cases, if the control device 450 determines that a mid-trip change does not affect the arrival time, the external user 102 may not need to be notified.

### Example method for determining a routing plan for an autonomous vehicle

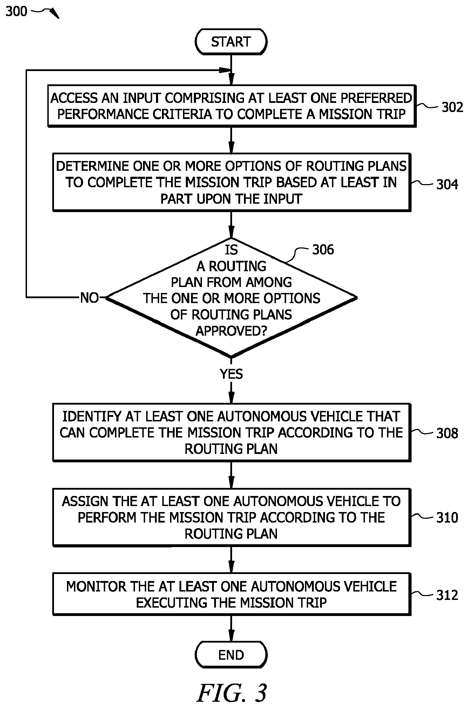

FIG. 3 illustrates an example flowchart of a method 300 for determining a routing plan for an autonomous vehicle 402 to optimize performance criteria 164 associated with the autonomous vehicle 402 and a mission trip 168. Modifications, additions, or omissions may be made to method 300. Method 300 may include more, fewer, or other operations. For example, operations may be performed in parallel or in any suitable order. While at times discussed as the system 100, autonomous vehicle 402, control device 450, scheduling server 150, oversight server 170, or components of any of thereof performing operations, any suitable system or components of the system may perform one or more operations of the method 300. For example, one or more operations of method 300 may be implemented, at least in part, in the form of software instructions 160, software instructions 188, and processing instructions 480, respectively, from FIGS. 1 and 4, stored on non-transitory, tangible, machine-readable media (e.g., memory 126, memory 178, and data storage 490, respectively, from FIGS. 1 and 4) that when run by one or more processors (e.g., processors 152, 172, and 470, respectively, from FIGS. 1 and 4) may cause the one or more processors to perform operations 302-312.

At 302, the scheduling server 150 accesses input 162 comprising at least one preferred performance criteria 164 to complete a mission trip 168. The input 162 may be received from the remote operator 184 and/or the external user 102. The remote operator 184 and/or the external user 102 may indicate one or more performance criteria 164 and their importance in the input 162. The mission trip 168 may be to transport cargo from a start location to a destination using one or more autonomous vehicles 402.

At 304, the scheduling server 150 determines one or more options of routing plans 136 to complete the mission trip 168 based at least in part upon the input 162. In this process, the scheduling server 150 may implement the routing optimization engine 140 to adjust priority levels 142 of the at least one preferred performance criteria 164, similar to that described in FIGS. 1 and 2.

At 306, the scheduling server 150 determines whether a routing plan 136 from among the one or more options of routing plans 136 is approved. In certain embodiments, the remote operator 184 may approve one of the options of routing plans 136 that leads to optimizing the at least one preferred performance criteria 164. In certain embodiments, the external user 102 may approve one of the options of routing plans 136 that leads to optimizing the at least one preferred performance criteria 164. In certain embodiments, the routing optimization engine 140 may use the determination of the remote operator 184 and/or the external user 102 as a training dataset for further refining the options of routing plans 136 in future mission trips 168. If the scheduling server 150 determines that a routing plan 136 from among the one or more options of routing plans 136 is approved, method 300 proceeds to 308. Otherwise, method 300 returns to 302, where the input 162 may be updated by the external user 102 and/or the remote operator 184, e.g., importance of performance criteria 164 may be revised.

At 308, the scheduling server 150 identifies at least one autonomous vehicle 402 that can complete the mission trip 168 according to the routing plan 136, similar to that described in FIG. 2.

At 310, the scheduling server 150 assigns the at least one autonomous vehicle 402 to perform the mission trip 168 according to the routing plan 136. In this process, the scheduling server 150 may generate the mission attributes 166, similar to that described in FIG. 2. In response to assigning the at least one autonomous vehicle 402 to perform the mission trip 168, the scheduling server 150 forwards the mission trip 168, routing plan 136, mission attributes 166, and an identifier of each assigned autonomous vehicle 402 to the oversight server 170.

At 312, the oversight server 170 monitors the at least one autonomous vehicle 402 executing the mission trip 168. In this process, the oversight server 170 may periodically (e.g., every second, every five seconds, every minute, or any other suitable time interval) communicate with the at least one autonomous vehicle 402 to ensure that the at least one autonomous vehicle 402 is performing the mission trip 168 according to the determined routing plan 136.

In certain embodiments, method 300 may include additional operations in cases where mid-trip changes are detected, similar to that described in FIG. 2.

### Example autonomous vehicle and its operation

FIG. 4 shows a block diagram of an example vehicle ecosystem 400 in which autonomous driving operations can be determined. As shown in FIG. 4, the autonomous vehicle 402 may be a semi-trailer truck. The vehicle ecosystem 400 may include several systems and components that can generate and/or deliver one or more sources of information/data and related services to the in-vehicle control computer 450 that may be located in an autonomous vehicle 402. The in-vehicle control computer 450 can be in data communication with a plurality of vehicle subsystems 440, all of which can be resident in the autonomous vehicle 402. A vehicle subsystem interface 460 may be provided to facilitate data communication between the in-vehicle control computer 450 and the plurality of vehicle subsystems 440. In some embodiments, the vehicle subsystem interface 460 can include a controller area network (CAN) controller to communicate with devices in the vehicle subsystems 440.

The autonomous vehicle 402 may include various vehicle subsystems that support the operation of the autonomous vehicle 402. The vehicle subsystems 440 may include a vehicle drive subsystem 442, a vehicle sensor subsystem 444, a vehicle control subsystem 448, and/or network communication subsystem 492. The components or devices of the vehicle drive subsystem 442, the vehicle sensor subsystem 444, and the vehicle control subsystem 448 shown in FIG. 4 are examples. The autonomous vehicle 402 may be configured as shown or any other configurations.

The vehicle drive subsystem 442 may include components operable to provide powered motion for the autonomous vehicle 402. In an example embodiment, the vehicle drive subsystem 442 may include an engine/motor 442a, wheels/tires 442b, a transmission 442c, an electrical subsystem 442d, and a power source 442e.

The vehicle sensor subsystem 444 may include a number of sensors 446 configured to sense information about an environment or condition of the autonomous vehicle 402. The vehicle sensor subsystem 444 may include one or more cameras 446a or image capture devices, a radar unit 446b, one or more temperature sensors 446c, a wireless communication unit 446d (e.g., a cellular communication transceiver), an inertial measurement unit (IMU) 446e, a laser range finder/LiDAR unit 446f, a Global Positioning System (GPS) transceiver 446g, a wiper control system 446h. The vehicle sensor subsystem 444 may also include sensors configured to monitor internal systems of the autonomous vehicle 402 (e.g., an O2 monitor, a fuel gauge, an engine oil temperature, etc.).

The IMU 446e may include any combination of sensors (e.g., accelerometers and gyroscopes) configured to sense position and orientation changes of the autonomous vehicle 402 based on inertial acceleration. The GPS transceiver 446g may be any sensor configured to estimate a geographic location of the autonomous vehicle 402. For this purpose, the GPS transceiver 446g may include a receiver/transmitter operable to provide information regarding the position of the autonomous vehicle 402 with respect to the Earth. The radar unit 446b may represent a system that utilizes radio signals to sense objects within the local environment of the autonomous vehicle 402. In some embodiments, in addition to sensing the objects, the radar unit 446b may additionally be configured to sense the speed and the heading of the objects proximate to the autonomous vehicle 402. The laser range finder or LiDAR unit 446f may be any sensor configured to use lasers to sense objects in the environment in which the autonomous vehicle 402 is located. The cameras 446a may include one or more devices configured to capture a plurality of images of the environment of the autonomous vehicle 402. The cameras 446a may be still image cameras or motion video cameras.

The vehicle control subsystem 448 may be configured to control the operation of the autonomous vehicle 402 and its components. Accordingly, the vehicle control subsystem 448 may include various elements such as a throttle and gear selector 448a, a brake unit 448b, a navigation unit 448c, a steering system 448d, and/or an autonomous control unit 448e. The throttle and gear selector 448a may be configured to control, for instance, the operating speed of the engine and, in turn, control the speed of the autonomous vehicle 402. The throttle and gear selector 448a may be configured to control the gear selection of the transmission. The brake unit 448b can include any combination of mechanisms configured to decelerate the autonomous vehicle 402. The brake unit 448b can slow the autonomous vehicle 402 in a standard manner, including by using friction to slow the wheels or engine braking. The brake unit 448b may include an anti-lock brake system (ABS) that can prevent the brakes from locking up when the brakes are applied. The navigation unit 448c may be any system configured to determine a driving path or route for the autonomous vehicle 402. The navigation unit 448c may additionally be configured to update the driving path dynamically while the autonomous vehicle 402 is in operation. In some embodiments, the navigation unit 448c may be configured to incorporate data from the GPS transceiver 446g and one or more predetermined maps so as to determine the driving path for the autonomous vehicle 402. The steering system 448d may represent any combination of mechanisms that may be operable to adjust the heading of autonomous vehicle 402 in an autonomous mode or in a driver-controlled mode.

The autonomous control unit 448e may represent a control system configured to identify, evaluate, and avoid or otherwise negotiate potential obstacles or obstructions in the environment of the autonomous vehicle 402. In general, the autonomous control unit 448e may be configured to control the autonomous vehicle 402 for operation without a driver or to provide driver assistance in controlling the autonomous vehicle 402. In some embodiments, the autonomous control unit 448e may be configured to incorporate data from the GPS transceiver 446g, the radar unit 446b, the LiDAR unit 446f, the cameras 446a, and/or other vehicle subsystems to determine the driving path or trajectory for the autonomous vehicle 402.

The network communication subsystem 492 may comprise network interfaces, such as routers, switches, modems, and/or the like. The network communication subsystem 492 may be configured to establish communication between the autonomous vehicle 402 and other systems, servers, etc. The network communication subsystem 492 may be further configured to send and receive data from and to other systems.

Many or all of the functions of the autonomous vehicle 402 can be controlled by the in-vehicle control computer 450. The in-vehicle control computer 450 may include at least one data processor 470 (which can include at least one microprocessor) that executes processing instructions 480 stored in a non-transitory computer-readable medium, such as the data storage device 490 or memory. The in-vehicle control computer 450 may also represent a plurality of computing devices that may serve to control individual components or subsystems of the autonomous vehicle 402 in a distributed fashion. In some embodiments, the data storage device 490 may contain processing instructions 480 (e.g., program logic) executable by the data processor 470 to perform various methods and/or functions of the autonomous vehicle 402, including those described with respect to FIGS. 1-6.

The data storage device 490 may contain additional instructions as well, including instructions to transmit data to, receive data from, interact with, or control one or more of the vehicle drive subsystem 442, the vehicle sensor subsystem 444, and the vehicle control subsystem 448. The in-vehicle control computer 450 can be configured to include a data processor 470 and a data storage device 490. The in-vehicle control computer 450 may control the function of the autonomous vehicle 402 based on inputs received from various vehicle subsystems (e.g., the vehicle drive subsystem 442, the vehicle sensor subsystem 444, and the vehicle control subsystem 448).

FIG. 5 shows an exemplary system 500 for providing precise autonomous driving operations. The system 500 may include several modules that can operate in the in-vehicle control computer 450, as described in FIG. 4. The in-vehicle control computer 450 may include a sensor fusion module 502 shown in the top left corner of FIG. 5, where the sensor fusion module 502 may perform at least four image or signal processing operations. The sensor fusion module 502 can obtain images from cameras located on an autonomous vehicle to perform image segmentation 504 to detect the presence of moving objects (e.g., other vehicles, pedestrians, etc.,) and/or static obstacles (e.g., stop sign, speed bump, terrain, etc.,) located around the autonomous vehicle. The sensor fusion module 502 can obtain LiDAR point cloud data item from LiDAR sensors located on the autonomous vehicle to perform LiDAR segmentation 506 to detect the presence of objects and/or obstacles located around the autonomous vehicle.

The sensor fusion module 502 can perform instance segmentation 508 on image and/or point cloud data items to identify an outline (e.g., boxes) around the objects and/or obstacles located around the autonomous vehicle. The sensor fusion module 502 can perform temporal fusion 510 where objects and/or obstacles from one image and/or one frame of point cloud data item are correlated with or associated with objects and/or obstacles from one or more images or frames subsequently received in time.

The sensor fusion module 502 can fuse the objects and/or obstacles from the images obtained from the camera and/or point cloud data item obtained from the LiDAR sensors. For example, the sensor fusion module 502 may determine based on a location of two cameras that an image from one of the cameras comprising one half of a vehicle located in front of the autonomous vehicle is the same as the vehicle captured by another camera. The sensor fusion module 502 may send the fused object information to the interference module 546 and the fused obstacle information to the occupancy grid module 560. The in-vehicle control computer may include the occupancy grid module 560 which can retrieve landmarks from a map database 558 stored in the in-vehicle control computer. The occupancy grid module 560 can determine drivable areas and/or obstacles from the fused obstacles obtained from the sensor fusion module 502 and the landmarks stored in the map database 558. For example, the occupancy grid module 560 can determine that a drivable area may include a speed bump obstacle.

Below the sensor fusion module 502, the in-vehicle control computer 450 may include a LiDAR-based object detection module 512 that can perform object detection 516 based on point cloud data item obtained from the LiDAR sensors 514 located on the autonomous vehicle. The object detection 516 technique can provide a location (e.g., in 3D world coordinates) of objects from the point cloud data item. Below the LiDAR-based object detection module 512, the in-vehicle control computer may include an image-based object detection module 518 that can perform object detection 524 based on images obtained from cameras 520 located on the autonomous vehicle. The object detection 518 technique can employ a deep machine learning technique 524 to provide a location (e.g., in 3D world coordinates) of objects from the image provided by the camera 520.

The radar 556 on the autonomous vehicle can scan an area in front of the autonomous vehicle or an area towards which the autonomous vehicle is driven. The radar data may be sent to the sensor fusion module 502 that can use the radar data to correlate the objects and/or obstacles detected by the radar 556 with the objects and/or obstacles detected from both the LiDAR point cloud data item and the camera image. The radar data also may be sent to the interference module 546 that can perform data processing on the radar data to track objects by object tracking module 548 as further described below.

The in-vehicle control computer may include an interference module 546 that receives the locations of the objects from the point cloud and the objects from the image, and the fused obj ects from the sensor fusion module 502. The interference module 546 also receives the radar data with which the interference module 546 can track objects by object tracking module 548 from one point cloud data item and one image obtained at one time instance to another (or the next) point cloud data item and another image obtained at another subsequent time instance.

The interference module 546 may perform object attribute estimation 550 to estimate one or more attributes of an object detected in an image or point cloud data item. The one or more attributes of the object may include a type of object (e.g., pedestrian, car, or truck, etc.). The interference module 546 may perform behavior prediction 552 to estimate or predict the motion pattern of an object detected in an image and/or a point cloud. The behavior prediction 552 can be performed to detect a location of an object in a set of images received at different points in time (e.g., sequential images) or in a set of point cloud data items received at different points in time (e.g., sequential point cloud data items). In some embodiments, the behavior prediction 552 can be performed for each image received from a camera and/or each point cloud data item received from the LiDAR sensor. In some embodiments, the interference module 546 can be performed (e.g., run or executed) to reduce computational load by performing behavior prediction 552 on every other or after every pre-determined number of images received from a camera or point cloud data item received from the LiDAR sensor (e.g., after every two images or after every three-point cloud data items).

The behavior prediction 552 feature may determine the speed and direction of the objects that surround the autonomous vehicle from the radar data, where the speed and direction information can be used to predict or determine motion patterns of objects. A motion pattern may comprise a predicted trajectory information of an object over a pre-determined length of time in the future after an image is received from a camera. Based on the motion pattern predicted, the interference module 546 may assign motion pattern situational tags to the objects (e.g., "located at coordinates (x,y)," "stopped," "driving at 50mph," "speeding up" or "slowing down"). The situation tags can describe the motion pattern of the object. The interference module 546 may send the one or more object attributes (e.g., types of the objects) and motion pattern situational tags to the planning module 562. The interference module 546 may perform an environment analysis 554 using any information acquired by system 500 and any number and combination of its components.

The in-vehicle control computer may include the planning module 562 that receives the object attributes and motion pattern situational tags from the interference module 546, the drivable area and/or obstacles, and the vehicle location and pose information from the fused localization module 526 (further described below).

The planning module 562 can perform navigation planning 564 to determine a set of trajectories on which the autonomous vehicle can be driven. The set of trajectories can be determined based on the drivable area information, the one or more object attributes of objects, the motion pattern situational tags of the objects, location of the obstacles, and the drivable area information. In some embodiments, the navigation planning 564 may include determining an area next to the road where the autonomous vehicle can be safely parked in case of emergencies. The planning module 562 may include behavioral decision making 566 to determine driving actions (e.g., steering, braking, throttle) in response to determining changing conditions on the road (e.g., traffic light turned yellow, or the autonomous vehicle is in an unsafe driving condition because another vehicle drove in front of the autonomous vehicle and in a region within a pre-determined safe distance of the location of the autonomous vehicle). The planning module 562 performs trajectory generation 568 and selects a trajectory from the set of trajectories determined by the navigation planning operation 564. The selected trajectory information may be sent by the planning module 562 to the control module 570. The planning module 562 may take user-preferred performance criteria 164 in navigation palling 564 or any other of its operations.

The in-vehicle control computer may include a control module 570 that receives the proposed trajectory from the planning module 562 and the autonomous vehicle location and pose from the fused localization module 526. The control module 570 may include a system identifier 572. The control module 570 can perform a model-based trajectory refinement 574 to refine the proposed trajectory. For example, the control module 570 can apply filtering (e.g., Kalman filter) to make the proposed trajectory data smooth and/or to minimize noise. The control module 570 may perform the robust control 576 by determining, based on the refined proposed trajectory information and current location and/or pose of the autonomous vehicle, an amount of brake pressure to apply, a steering angle, a throttle amount to control the speed of the vehicle, and/or a transmission gear. The control module 570 can send the determined brake pressure, steering angle, throttle amount, and/or transmission gear to one or more devices in the autonomous vehicle to control and facilitate precise driving operations of the autonomous vehicle.

The deep image-based object detection 524 performed by the image-based object detection module 518 can also be used detect landmarks (e.g., stop signs, speed bumps, etc.,) on the road. The in-vehicle control computer may include a fused localization module 526 that obtains landmarks detected from images, the landmarks obtained from a map database 536 stored on the in-vehicle control computer, the landmarks detected from the point cloud data item by the LiDAR-based object detection module 512, the speed and displacement from the odometer sensor 544 and the estimated location of the autonomous vehicle from the GPS/IMU sensor 538 (i.e., GPS sensor 540 and IMU sensor 542) located on or in the autonomous vehicle. Based on this information, the fused localization module 526 can perform a localization operation 528 to determine a location of the autonomous vehicle, which can be sent to the planning module 562 and the control module 570.

The fused localization module 526 can estimate pose 530 of the autonomous vehicle based on the GPS and/or IMU sensors 538. The pose of the autonomous vehicle can be sent to the planning module 562 and the control module 570. The fused localization module 526 can also estimate status (e.g., location, possible angle of movement) of the trailer unit based on (e.g., trailer status estimation 534), for example, the information provided by the IMU sensor 542 (e.g., angular rate and/or linear velocity). The fused localization module 526 may also check the map content 532.

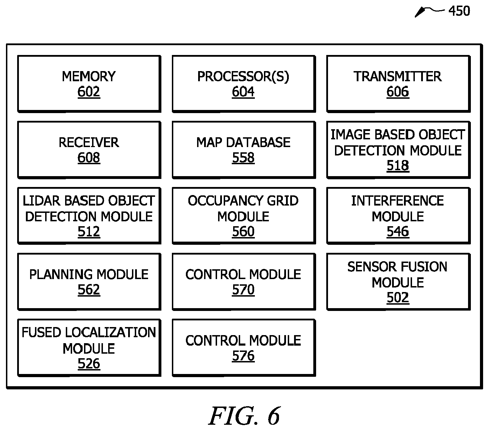

FIG. 6 shows an exemplary block diagram of an in-vehicle control computer 450 included in an autonomous vehicle 402. The in-vehicle control computer 450 may include at least one processor 604 and a memory 602 having instructions stored thereupon (e.g., software instructions 128 and processing instructions 480 in FIGS. 1 and 4, respectively). The instructions, upon execution by the processor 604, configure the in-vehicle control computer 450 and/or the various modules of the in-vehicle control computer 450 to perform the operations described in FIGS. 1-6. The transmitter 606 may transmit or send information or data to one or more devices in the autonomous vehicle. For example, the transmitter 606 can send an instruction to one or more motors of the steering wheel to steer the autonomous vehicle. The receiver 608 receives information or data transmitted or sent by one or more devices. For example, the receiver 608 receives a status of the current speed from the odometer sensor or the current transmission gear from the transmission. The transmitter 606 and receiver 608 also may be configured to communicate with the plurality of vehicle subsystems 440 and the in-vehicle control computer 450 described above in FIGS. 4 and 5.

While several embodiments have been provided in this disclosure, it should be understood that the disclosed systems and methods might be embodied in many other specific forms without departing from the spirit or scope of this disclosure. The present examples are to be considered as illustrative and not restrictive, and the intention is not to be limited to the details given herein. For example, the various elements or components may be combined or integrated into another system or certain features may be omitted, or not implemented.

In addition, techniques, systems, subsystems, and methods described and illustrated in the various embodiments as discrete or separate may be combined or integrated with other systems, modules, techniques, or methods without departing from the scope of this disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the spirit and scope disclosed herein.

To aid the Patent Office, and any readers of any patent issued on this application in interpreting the claims appended hereto, applicants note that they do not intend any of the appended claims to invoke 35 U.S.C. § 112(f) as it exists on the date of filing hereof unless the words "means for" or "step for" are explicitly used in the particular claim.

Implementations of the disclosure can be described in view of the following clauses, the features of which can be combined in any reasonable manner.

Clause 1. A system, comprising:
a fleet of autonomous vehicles;
a scheduling server, communicatively coupled with the fleet of autonomous vehicles, and comprising a first processor configured to:
   display a user interface, wherein the user interface is configured to accept an input comprising at least one preferred performance criteria to complete a mission trip;
   determine, based at least in part upon the input, a routing plan to complete the mission trip, wherein the routing plan is determined to optimize the at least one preferred performance criteria;
   identify at least one autonomous vehicle from among the fleet that can complete the mission trip according to the determined routing plan; and
   assign the at least one autonomous vehicle to perform the mission trip according to the determined routing plan;
   wherein the at least one autonomous vehicle comprises a control device comprising a second processor configured to:
      receive the determined routing plan; and
      instruct a respective autonomous vehicle from among the at least one autonomous vehicle to travel along a road according to the determined routing plan.

Clause 2. The system of Clause 1, wherein the at least one preferred performance criteria comprises:
on-time arrival of a majority of the fleet;
on-time departure of a majority of the fleet;
lowest fuel consumption by a majority of the fleet;
shortest time on the road by a majority of the fleet;
avoidance of areas of extreme weather;
avoidance of areas with road roughness above a threshold value;
avoidance of known areas of congested traffic;
avoidance of known areas of road closures;
avoidance of toll roads;
avoidance of routes with overpasses or tunnels below a certain threshold height;
avoidance of routes with uphill or downhill grades surpassing threshold values; and
an operation design domain within which the at least one autonomous vehicle is known to be able to operate, wherein the operating design domain comprises previously mapped routes, weather conditions, and traffic conditions.

Clause 3. The system of Clause 1 or Clause 2, wherein determining the routing plan for the at least one autonomous vehicle is further based at least in part upon one or more of the following:
a first preference for routing plans that enable a majority of the fleet to have wireless communication with a oversight server more than a first threshold amount of time, wherein the oversight server is communicatively coupled with the fleet and configured to oversee traveling of the at least one autonomous vehicle according to the determined routing plan;
a second preference for routing plans that are included in a map database, wherein the map database comprises at least a portion of a map where location coordinates and types of objects, roads, and traffic signs on the map are indicated, and wherein the map database is stored in a memory associated with the at least one autonomous vehicle or within the oversight server;
a third preference for routing plans that allow for accuracy in determining a location of the at least one autonomous vehicle in the fleet more than a second threshold amount of time; and
a safety and maintenance schedule for the at least one autonomous vehicle in the fleet.

Clause 4. The system of Clause 1-3, wherein the determined routing plan comprises one or more of the following:
a suggested main route for the at least one autonomous vehicle;
a suggested velocity for each segment of the determined routing plan for the at least one autonomous vehicle; and
a frequency for check-in with an oversight server for the at least one autonomous vehicle, wherein the oversight server is communicatively coupled with the fleet and configured to oversee traveling of the at least one autonomous vehicle according to the determined routing plan.

Clause 5. The system of Clause 1-4, wherein the second processor is further configured to determine a trajectory for each respective autonomous vehicle from among the at least one autonomous vehicle.

Clause 6. The system of Clause 5, wherein the trajectory for each autonomous vehicle in the fleet is based at least in part upon one or more of the following:
traffic information supplied by an oversight server;
weather conditions determined by at least one sensor of each autonomous vehicle;
perception data provided by the at least one sensor on each autonomous vehicle; and
vehicle health data provided by the at least one sensor on each autonomous vehicle.

Clause 7. The system of Clause 1-6, wherein each of the at least one preferred performance criteria is assigned a priority value that represents a priority of a respective performance criteria.

Clause 8. A method comprising:
displaying, by a first processor associated with a scheduling server, a user interface, wherein the user interface is configured to accept an input comprising at least one preferred performance criteria to complete a mission trip;
determining, by the first processor, based at least in part upon the input, a routing plan to complete the mission trip, wherein the routing plan is determined to optimize the at least one preferred performance criteria;
identifying, by the first processor, at least one autonomous vehicle from among the fleet that can complete the mission trip according to the determined routing plan;
assigning, by the first processor, the at least one autonomous vehicle to perform the mission trip according to the determined routing plan;
receiving, by a second processor associated with a control device of the at least one autonomous vehicle, the determined routing plan; and
instructing, by the second processor, a respective autonomous vehicle from among the at least one autonomous vehicle to travel along a road according to the determined routing plan.

Clause 9. The method of Clause 8, wherein determining the routing plan to complete the mission trip comprises:
determining a set of routing plans comprising a first routing plan and a second routing plan;
determining a first weighted sum of the at least one preferred performance criteria if the first routing plan is selected to perform the mission trip;
determining a second weighted sum of the at least one preferred performance criteria if the second routing plan is selected to perform the mission trip;
comparing the first weighted sum with the second weighted sum;
determining that the first weighted sum is more than the second weighted sum; and
selecting the first routing plan to complete the mission trip.

Clause 10. The method of Clause 8 or Clause 9, wherein the at least one autonomous vehicle comprises at least one sensor comprising a camera, a light detection and ranging (LiDAR) sensor, a motion sensor, and an infrared sensor.

Clause 11. The method of Clause 8-10, the input comprising the at least one preferred performance criteria is received from an operator.

Clause 12. The method of Clause 8-11, the input comprising the at least one preferred performance criteria is received from an individual who requested the mission trip.

Clause 13. The method of Clause 8-12, further comprising:
in response to assigning the at least one autonomous vehicle to perform the mission trip according to the determined routing plan, communicating, by the first processor, mission attributes to an oversight server;
receiving, by a third processor associated with the oversight server, the mission attributes; and
while the at least one autonomous vehicle is performing the mission trip, communicating, by the third processor, periodically with the at least one autonomous vehicle to ensure that the at least one autonomous vehicle is performing the mission trip according to the determined routing plan.

Clause 14. The method of Clause 13, wherein the mission attributes comprises one or more of:
a tracker type associated with the at least one autonomous vehicle;
a tracker ID associated with the at least one autonomous vehicle;
a trailer type associated with the at least one autonomous vehicle;
a trailer ID associated with the at least one autonomous vehicle;
a mission type associated with the mission trip;
a departure time;
a departure location;
an estimated arrival time;
an arrival window;
an arrival location;
a load type to be carried by the at least one autonomous vehicle;
a weight of a load to be carried by the at least one autonomous vehicle;
an individual who requested the mission trip; and
a vehicle configuration associated with the at least one autonomous vehicle.

Clause 15. A computer program comprising executable instructions stored in a computer-readable medium that when executed by at least one processor causes the at least one processor to:
display a user interface, wherein the user interface is configured to accept input comprising at least one preferred performance criteria to complete a mission trip;
determine based at least in part upon the input, a routing plan to complete the mission trip, wherein the routing plan is determined to optimize the at least one preferred performance criteria;
identify at least one autonomous vehicle from among the fleet that can complete the mission trip according to the determined routing plan;
assign the at least one autonomous vehicle to perform the mission trip according to the determined routing plan;
receive the determined routing plan; and
instruct a respective autonomous vehicle from among the at least one autonomous vehicle to travel along a road according to the determined routing plan.

Clause 16. The computer program of Clause 15, wherein the instructions when executed by the at least one processor, further cause the at least one processor to:
while an autonomous vehicle from among the at least one autonomous vehicle is performing the mission trip, determine that the mission trip is delayed due to an unexpected event comprising a traffic congestion or an extreme weather condition;
notify an oversight server that the mission trip is delayed; and
receive, from a scheduling server, a first updated routing plan to perform the mission trip.

Clause 17. The computer program of Clause 15 or Clause 16, wherein the instructions when executed by the at least one processor, further cause the at least one processor to:
while an autonomous vehicle from among the at least one autonomous vehicle is performing the mission trip, receive a first notification message from the autonomous vehicle that indicates the mission trip is delayed due to an unexpected event comprising a traffic congestion or an extreme weather condition;
determine, based at least in part upon the input and the first notification message, a first updated routing plan to perform the mission trip; and
communicate the first updated routing plan to an oversight server.

Clause 18. The computer program of Clause 17, wherein the first updated routing plan is forwarded to the autonomous vehicle.

Clause 19. The computer program of Clause 15-18, wherein the instructions when executed by the at least one processor, further cause the at least one processor to :
while an autonomous vehicle from among the at least one autonomous vehicle is performing the mission trip, determine that the mission trip cannot be completed due to an unexpected event comprising a health level of the autonomous vehicle being less than a threshold value; and
notify an oversight server that the mission trip cannot be completed.

Clause 20. The computer program of Clause 15-19, wherein the instructions when executed by the at least one processor, further cause the at least one processor to:
while an autonomous vehicle from among the at least one autonomous vehicle is performing the mission trip, receive a second notification message from the autonomous vehicle that indicates the mission trip cannot be completed due to an unexpected event comprising a health level of the autonomous vehicle being less than a threshold value;
determine, based at least in part upon the input and the second notification message, a second updated routing plan to perform the mission trip;
identify another autonomous vehicle that can complete the mission trip according to the second updated routing plan;
determine a new departure time and a new arrival time for the other autonomous vehicle; and
inform an individual who requested the mission trip about the new departure time and the new arrival time.

## Claims

1. A method comprising:
displaying, by a first processor associated with a scheduling server, a user interface, wherein the user interface is configured to accept an input comprising at least one preferred performance criteria to complete a mission trip;
determining, by the first processor, based at least in part upon the input, a routing plan to complete the mission trip, wherein the routing plan is determined to optimize the at least one preferred performance criteria;
identifying, by the first processor, at least one autonomous vehicle from among the fleet that can complete the mission trip according to the determined routing plan;
assigning, by the first processor, the at least one autonomous vehicle to perform the mission trip according to the determined routing plan;
receiving, by a second processor associated with a control device of the at least one autonomous vehicle, the determined routing plan; and
instructing, by the second processor, a respective autonomous vehicle from among the at least one autonomous vehicle to travel along a road according to the determined routing plan.

2. The method of claim 1, wherein determining the routing plan to complete the mission trip comprises:
determining a set of routing plans comprising a first routing plan and a second routing plan;
determining a first weighted sum of the at least one preferred performance criteria if the first routing plan is selected to perform the mission trip;
determining a second weighted sum of the at least one preferred performance criteria if the second routing plan is selected to perform the mission trip;
comparing the first weighted sum with the second weighted sum;
determining that the first weighted sum is more than the second weighted sum; and
selecting the first routing plan to complete the mission trip.

3. The method of any preceding claim, further comprising:
in response to assigning the at least one autonomous vehicle to perform the mission trip according to the determined routing plan, communicating, by the first processor, at least one mission attribute to an oversight server;
receiving, by a third processor associated with the oversight server, the at least one mission attribute; and
while the at least one autonomous vehicle is performing the mission trip, communicating, by the third processor, periodically with the at least one autonomous vehicle to ensure that the at least one autonomous vehicle is performing the mission trip according to the determined routing plan.

4. The method of claim 3, wherein the at least one mission attribute comprises one or more of:
a tracker type associated with the at least one autonomous vehicle;
a tracker ID associated with the at least one autonomous vehicle;
a trailer type associated with the at least one autonomous vehicle;
a trailer ID associated with the at least one autonomous vehicle;
a mission type associated with the mission trip;
a departure time;
a departure location;
an estimated arrival time;
an arrival window;
an arrival location;
a load type to be carried by the at least one autonomous vehicle;
a weight of a load to be carried by the at least one autonomous vehicle;
an individual who requested the mission trip; and
a vehicle configuration associated with the at least one autonomous vehicle.

5. The method of any preceding claim, wherein the at least one preferred performance criteria comprises:
on-time arrival of a majority of the fleet;
on-time departure of a majority of the fleet;
lowest fuel consumption by a majority of the fleet;
shortest time on the road by a majority of the fleet;
avoidance of areas of extreme weather;
avoidance of areas with road roughness above a threshold value;
avoidance of known areas of congested traffic;
avoidance of known areas of road closures;
avoidance of toll roads;
avoidance of routes with overpasses or tunnels below a certain threshold height;
avoidance of routes with uphill or downhill grades surpassing threshold values; and
an operation design domain within which the at least one autonomous vehicle is known to be able to operate, wherein the operating design domain comprises previously mapped routes, weather conditions, and traffic conditions.

6. The method of any preceding claim, wherein determining the routing plan for the at least one autonomous vehicle is further based at least in part upon one or more of the following:
a first preference for routing plans that enable a majority of the fleet to have wireless communication with a oversight server more than a first threshold amount of time, wherein the oversight server is communicatively coupled with the fleet and configured to oversee traveling of the at least one autonomous vehicle according to the determined routing plan;
a second preference for routing plans that are included in a map database, wherein the map database comprises at least a portion of a map where location coordinates and types of objects, roads, and traffic signs on the map are indicated, and wherein the map database is stored in a memory associated with the at least one autonomous vehicle or within the oversight server;
a third preference for routing plans that allow for accuracy in determining a location of the at least one autonomous vehicle in the fleet more than a second threshold amount of time; and
a safety and maintenance schedule for the at least one autonomous vehicle in the fleet.

7. The method of any preceding claim, wherein the determined routing plan comprises one or more of the following:
a suggested main route for the at least one autonomous vehicle;
a suggested velocity for each segment of the determined routing plan for the at least one autonomous vehicle; and
a frequency for check-in with an oversight server for the at least one autonomous vehicle, wherein the oversight server is communicatively coupled with the fleet and configured to oversee traveling of the at least one autonomous vehicle according to the determined routing plan.

8. The method of any preceding claim, further comprising determining, by the second processor, a trajectory for each respective autonomous vehicle from among the at least one autonomous vehicle; optionally wherein the trajectory for each autonomous vehicle in the fleet is based at least in part upon one or more of the following:
traffic information supplied by an oversight server;
weather conditions determined by at least one sensor of each autonomous vehicle;
perception data provided by the at least one sensor on each autonomous vehicle; and
vehicle health data provided by the at least one sensor on each autonomous vehicle.

9. The method of any preceding claim, wherein each of the at least one preferred performance criteria is assigned a priority value that represents a priority of a respective performance criteria.

10. The method of any preceding claim, further comprising, while an autonomous vehicle from among the at least one autonomous vehicle is performing the mission trip, determining that the mission trip is delayed due to an unexpected event comprising a traffic congestion or an extreme weather condition;
notifying an oversight server that the mission trip is delayed; and
receiving, from a scheduling server, a first updated routing plan to perform the mission trip.

11. The method of any preceding claim, further comprising, while an autonomous vehicle from among the at least one autonomous vehicle is performing the mission trip, receiving a first notification message from the autonomous vehicle that indicates the mission trip is delayed due to an unexpected event comprising a traffic congestion or an extreme weather condition;
determining, based at least in part upon the input and the first notification message, a first updated routing plan to perform the mission trip; and
communicating the first updated routing plan to an oversight server;
optionally wherein the first updated routing plan is forwarded to the autonomous vehicle.

12. The method of any preceding claim further comprising, while an autonomous vehicle from among the at least one autonomous vehicle is performing the mission trip, determining that the mission trip cannot be completed due to an unexpected event comprising a health level of the autonomous vehicle being less than a threshold value; and
notifying an oversight server that the mission trip cannot be completed.

13. The method of any preceding claim, further comprising, while an autonomous vehicle from among the at least one autonomous vehicle is performing the mission trip, receiving a second notification message from the autonomous vehicle that indicates the mission trip cannot be completed due to an unexpected event comprising a health level of the autonomous vehicle being less than a threshold value;
determining, based at least in part upon the input and the second notification message, a second updated routing plan to perform the mission trip;
identifying another autonomous vehicle that can complete the mission trip according to the second updated routing plan;
determining a new departure time and a new arrival time for the other autonomous vehicle; and
informing an individual who requested the mission trip about the new departure time and the new arrival time.

14. A system configured to perform the method of any preceding claim, comprising:
the fleet of autonomous vehicles;
the scheduling server, communicatively coupled with the fleet of autonomous vehicles, and comprising the first processor; and
wherein the at least one autonomous vehicle from among the fleet comprises the control device comprises the second processor.

15. A computer program comprising executable instructions stored in a computer-readable medium that, when executed by at least one processor, causes the at least one processor to:
display a user interface, wherein the user interface is configured to accept input comprising at least one preferred performance criteria to complete a mission trip;
determine based at least in part upon the input, a routing plan to complete the mission trip, wherein the routing plan is determined to optimize the at least one preferred performance criteria;
identify at least one autonomous vehicle from among the fleet that can complete the mission trip according to the determined routing plan;
assign the at least one autonomous vehicle to perform the mission trip according to the determined routing plan;
receive the determined routing plan; and
instruct a respective autonomous vehicle from among the at least one autonomous vehicle to travel along a road according to the determined routing plan.
